# EUROPEAN PATENT APPLICATION

(11) **EP 4 661 405 A1**
(43) Date of publication of application: **10.12.2025**
(21) Application number: 23919743.7
(22) Date of filing: 02.02.2023
(51) Int. Cl.: H04N 21/2665, H04N 21/437

(54) **INFORMATION PROCESSING DEVICE, USER TERMINAL, AND INFORMATION PROCESSING METHOD**

(71) Applicant: Micware Co., Ltd., Kobe-shi, Hyogo 650-0035 (JP)
(72) Inventor: NARUSHIMA Kenji, Kobe-shi, Hyogo 650-0035 (JP); NIKAYA Shiho, Sanda-shi, Hyogo 669-1330 (JP)
(74) Representative: Becker Kurig & Partner Patentanwälte mbB
(86) International application number: PCT/JP2023/003445
(87) International publication number: WO 2024/161606

(57) **Abstract**

[Problem] To solve such a problem according to the prior art that motion pictures at a plurality of places to be compared cannot be obtained. [Solution] Motion pictures at a plurality of places to be compared can be obtained by an information processing device 1 comprising an inquiry reception unit 122 which receives, from a user terminal 3, an inquiry including identification information that identifies the plurality of places to be compared, a motion picture acquisition unit 131 which acquires motion pictures transmitted from mobile terminals 2 that are respectively present at the plurality of places identified by the identification information, a screen composing unit 132 which composes one screen using the plurality of motion pictures, and a screen transmission unit 141 which transmits the screen to the user terminal 3.

## Description

### Technical Field

The invention relates to an information processing device, etc., that provides images of multiple locations of comparison targets.

### Related Art

Conventionally, a system is provided (see Patent Document 1) that includes: a terminal with which a viewer views motion pictures; an advertising motion picture distribution server that distributes advertising motion picture contents including an advertised product to the terminal; and an advertised product database that stores image information of the advertised product. The system includes, in the terminal that receives the distribution of the advertising motion picture contents, a means for comparing image information of the advertised product in the motion picture and image information of the advertised product recorded in the advertised product database in response to a viewer specifying the advertised product in the motion picture through a predetermined instruction operation, and identifying the information regarding the advertised product that is specified. The system enables access to an information provider of the advertised product that is specified from the terminal (see Patent Document 1).

### Prior Art Document(s)

### Patent Document(s)

Patent Document 1: Japanese Patent Application Laid-Open Publication No. 2005-286882

### SUMMARY OF INVENTION

### [Issues to be solved]

However, in the conventional technology, it is not possible to acquire motion pictures of multiple locations of comparison targets. The locations of comparison targets are, for example, supermarkets (for example, supermarket A and supermarket B), department stores (for example, department store X, department store Y, and department store Z), highways (for example, Meishin Expressway and Keiji Bypass), but the types thereof are not limited.

### [Means for solving the issues]

An information processing device according to the first invention includes: an inquiry reception unit, receiving, from a user terminal, an inquiry including identification information for identifying multiple locations of comparison targets; a motion picture acquisition unit, acquiring motion pictures transmitted from mobile terminals present at the respective locations identified by the identification information; a screen configuration unit, forming a screen by using the motion pictures; and a screen transmission unit, transmitting the screen to the user terminal.

With such a configuration, the motion pictures of multiple locations of comparison targets can be obtained.

Also, regarding the information processing device of the second invention, in the first invention, the motion picture acquisition unit refers to a group management unit storing one or more pieces of group information including location identifiers of the respective locations of the comparison targets, acquires the location identifiers corresponding to the identification information included in the inquiry, and acquires the motion pictures received from the mobile terminals present at the respective locations identified by the location identifiers.

With such a configuration, the motion pictures of multiple locations of comparison targets can be obtained.

Also, regarding the information processing device of the third invention, in the first or second invention, the motion picture acquisition unit transmits transmission instructions for the motion pictures to the mobile terminals present at the respective locations identified by the identification information, and receives the motion pictures from the mobile terminals in response to transmission of the transmission instructions.

With such a configuration, the motion pictures of multiple locations of comparison targets can be obtained.

Also, with respect to the third invention, the information processing device of the fourth invention further includes a position reception unit, receiving position information from the respective mobile terminals. The motion picture acquisition unit includes a terminal determination means, determining the mobile terminals present in the respective locations identified by the identification information by using the position information received by the position reception unit; an instruction transmission means, transmitting the transmission instruction to the respective mobile terminals determined by the terminal determination means; and a motion picture reception means, receiving the motion pictures from the respective mobile terminals.

With such a configuration, the motion pictures of multiple locations of comparison targets can be obtained.

Also, regarding the information processing device of the fifth invention, in the third invention, the motion picture acquisition unit includes: an instruction transmission means, transmitting an inquiry based on the identification information to the mobile terminals; and a motion picture reception means, receiving the motion pictures from the respective mobile terminals determined as corresponding to the identification information, in response to transmission of the inquiry.

With such a configuration, the motion pictures of multiple locations of comparison targets can be obtained.

Also, with respect to the first or second invention, the information processing device of the sixth invention further includes a motion picture reception unit, receiving the motion pictures associated with position information from the mobile terminals; and a motion picture accumulation unit, accumulating the respective motion pictures in association with the position information. The motion picture acquisition unit acquires the motion pictures associated with the position information corresponding to the respective locations identified by the identification information from the motion pictures accumulated by the motion picture accumulation unit.

With such a configuration, the motion pictures of multiple locations of comparison targets can be obtained.

Also, regarding the information processing device of the seventh invention, in any one of the first to sixth inventions, the screen configuration unit includes: a ranking means, acquiring attribute values of the respective motion pictures and ranking the motion pictures by using the attribute values; and a configuration means, forming the screen in accordance with a ranking of the respective motion pictures.

With such a configuration, ranked motion pictures can be obtained.
Also, with respect to any one of the first to sixth inventions, the information processing device of the seventh invention further includes a third preservation means, accumulating the motion pictures or the screen including the motion pictures by associating the motion pictures or the screen including the motion pictures with a right-holder identifier identifying a user of the user terminal. With such a configuration, the right-holder of the motion picture can be made a user who needs the motion picture.

Also, a user terminal according to the ninth invention includes: a location acquisition unit, acquiring a location identifier identifying a location of a user terminal; an inquiry acquisition unit, acquiring an inquiry including identification information by using the location identifier; a user transmission unit, transmitting the inquiry to an information processing device; a user reception unit, receiving, from the information processing device, a screen formed by using motion pictures of a plurality of locations including the location identified by the location identifier; and a user terminal, including a user output unit, outputting the screen.

With such a configuration, motion pictures of multiple locations of comparison targets can be easily obtained.

Also, a user terminal according to the tenth invention includes: an inquiry acquisition unit, acquiring an inquiry including identification information including a user identifier; a user transmission unit, transmitting the inquiry to an information processing device; a user reception unit, receiving, from the information processing device, a screen formed by using motion pictures of multiple locations identified by multiple location identifiers corresponding to the user identifier; and a user output unit, outputting the screen.

With such a configuration, the motion pictures of multiple locations of comparison targets can be easily obtained.

### Effects of Invention

According to the information processing device of the invention, the motion pictures of multiple locations of comparison targets can be provided.

### BRIEF DESCRIPTION OF DRAWINGS

[FIG. 1] FIG. 1 is a conceptual diagram of an information system A in Embodiment 1.
[FIG. 2] FIG. 2 is a block diagram of the same information system A.
[FIG. 3] FIG. 3 is a block diagram of the information processing device 1.
[FIG. 4] FIG. 4 is a flowchart describing a first operation example of the information processing device 1.
[FIG. 5] FIG. 5 is a flowchart describing an example of the terminal determination process.
[FIG. 6] FIG. 6 is a flowchart describing an example of the comparison target position acquisition process.
[FIG. 7] FIG. 7 is a flowchart describing an example of the screen configuration process.
[FIG. 8] FIG. 8 is a flowchart describing an example of the fourth preservation process.
[FIG. 9] FIG. 9 is a flowchart describing an example of the reward process.
[FIG. 10] FIG. 10 is a flowchart describing a second operation example of the same information processing device 1.
[FIG. 11] FIG. 11 is a flowchart describing a first operation example of the mobile terminal 2.
[FIG. 12] FIG. 12 is a flowchart describing a second operation example of the mobile terminal 2.
[FIG. 13] FIG. 13 is a flowchart describing an operation example of the user terminal 3.
[FIG. 14] FIG. 14 is a diagram showing the group management table.
[FIG. 15] FIG. 15 is a diagram showing the terminal management table.
[FIG. 16] FIG. 16 is a diagram showing the output example.
[FIG. 17] FIG. 17 is a diagram showing the same output example.
[FIG. 18] FIG. 18 is a block diagram of an information system B in Embodiment 2.
[FIG. 19] FIG. 19 is a flowchart describing an operation example of the information processing device 4.
[FIG. 20] FIG. 20 is a flowchart describing an example of the motion picture determination process.
[FIG. 21] FIG. 21 is an overview diagram of a computer system in the embodiment.
[FIG. 22] FIG. 22 is a block diagram of the computer system.

### DESCRIPTION OF EMBODIMENTS

Hereinafter, embodiments of an information processing device, etc., will be described with reference to the drawings. Components assigned the same reference numerals in the embodiments perform similar operations, so repeated descriptions may be omitted.

### (Embodiment 1)

### <Overview of Embodiment 1>

In the embodiment, an information processing device that receives an inquiry specifying multiple locations of comparison targets and transmits a screen including motion pictures of one or more locations among the locations to a user terminal based on the inquiry will be described. A motion picture is appropriately referred to as a video. The motion picture may be a real-time video. Real-time video refers to a video that is being captured, but there may be a delay from the time when the video is captured to the time the is displayed. Also, the screen may include the motion pictures of all of the locations.

Also, in the embodiment, an information processing device that determines mobile terminals that capture respective locations of comparison targets, receives the motion pictures from the respective mobile terminals, and transmits a screen having one or more of the motion pictures to a user terminal will be described.

Also, in the embodiment, an information system will be described that includes: a mobile terminal that receives an inquiry, determines whether the inquiry matches, and transmits a captured motion picture in the case where the motion picture of the location that matches the inquiry is being captured; and an information processing device that transmits the inquiry to multiple mobile terminals, receives the motion picture from the mobile terminal determined as matching the inquiry, and transmits a screen including the motion picture to the user terminal.

Furthermore, in the embodiment, an information processing device that ranks the motion pictures or targets in the motion pictures based on analysis results of the motion pictures, etc., will be described.

In the specification, information X being associated with information Y means that the information Y can be acquired from the information X, or the information X can be acquired from the information Y, and the method of association is irrelevant. The information X and the information Y may be linked, the information X and the information Y may be present in the same buffer, the information X may be included in the information Y, the information Y may be included in the information X, etc.

### <Overview of Information System A>

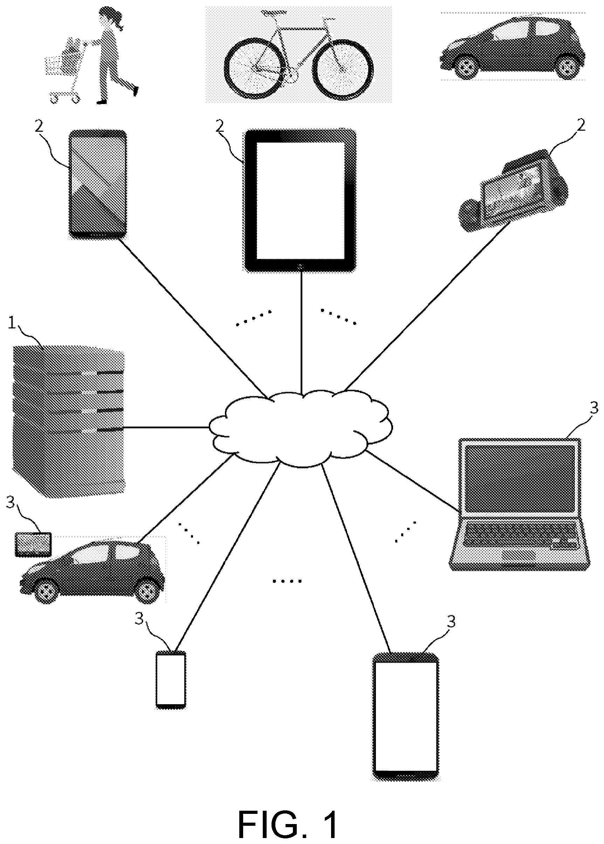

FIG. 1 is a conceptual diagram of an information system A in the embodiment. The information system A includes an information processing device 1, one or more mobile terminals 2, and one or more user terminals 3.

The information processing device 1 is a device that provides a motion picture received from the mobile terminal 2 to the user terminal 3. The information processing device 1 is, in general, a server that provides motion pictures to the user terminal 3. The information processing device 1 is, for example, a cloud server, an ASP server, etc., but the type is irrelevant. The information processing device 1 may also be a device that constitutes a blockchain.

The interval between multiple still images included in the motion picture in the specification is irrelevant. The motion picture is, for example, a motion picture with 60 frames per second or a motion picture with 30 frames per second. However, the motion picture may may also be a set of still images captured within an interval of a predetermined time (e.g., 1 min) or more, or a set of multiple still images captured when a predetermined condition is satisfied. Still images may also be referred to as fields or frames.

The mobile terminal 2 is a terminal that can move. The mobile terminal 2 is a device that captures a motion picture and transmits the motion picture to the information processing device 1. The mobile terminal 2 is a terminal installed at a mobile object and is a terminal that captures a motion picture. The mobile terminal 2 is, for example, a smartphone, a tablet terminal, a camera with a communication function, glasses with a camera, a smartwatch with a camera, or a drive recorder. The type of the mobile terminal 2 is irrelevant. Also, installation generally refers to being fixed, but may also be considered as covering the extent of being in contact or held. A mobile object is a moving object, such as an automobile, a two-wheeled vehicle, a bicycle, or a living being. A living being is typically a person, but may also be other creatures.

The user terminal 3 is a terminal used by a user. The user terminal 3 is, for example, a device that receives an inquiry that identifies multiple locations of comparison targets, and outputs the real-time videos of the locations based on the inquiry. The user is a person who views the motion picture or a person who needs the motion picture. The user terminal 3 may also exhibit the function of the mobile terminal 2. That is, the user terminal 3 may also be a terminal of a user who provides motion pictures. The user terminal 3 is, for example, a smartphone, a tablet terminal, a so-called personal computer, a navigation terminal, etc., and the type is irrelevant.

The information processing device 1 and each of the one or more mobile terminals 2, and the information processing device 1 and each of the one or more user terminals 3 can typically communicate via a network such as the Internet.

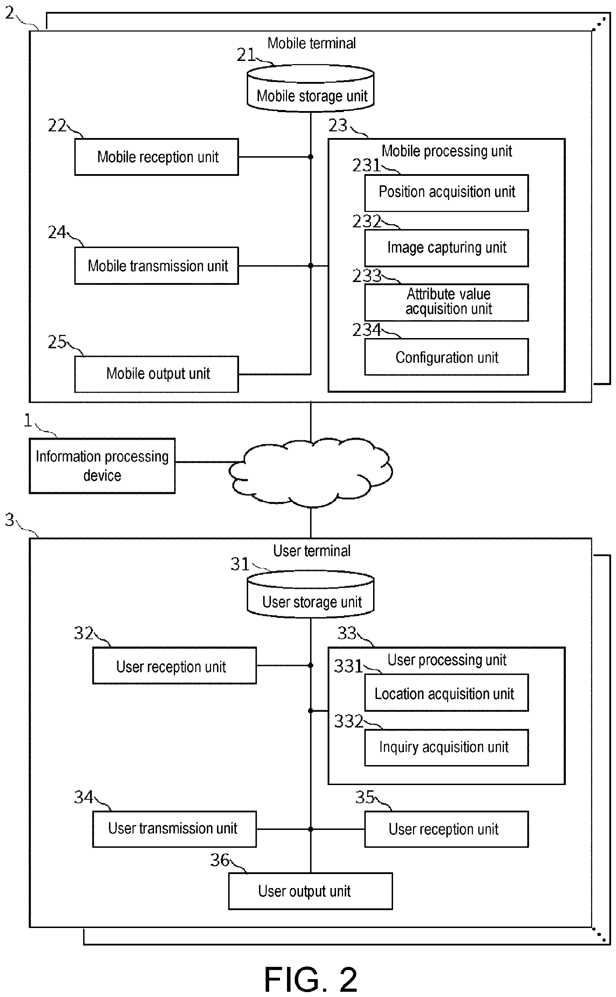

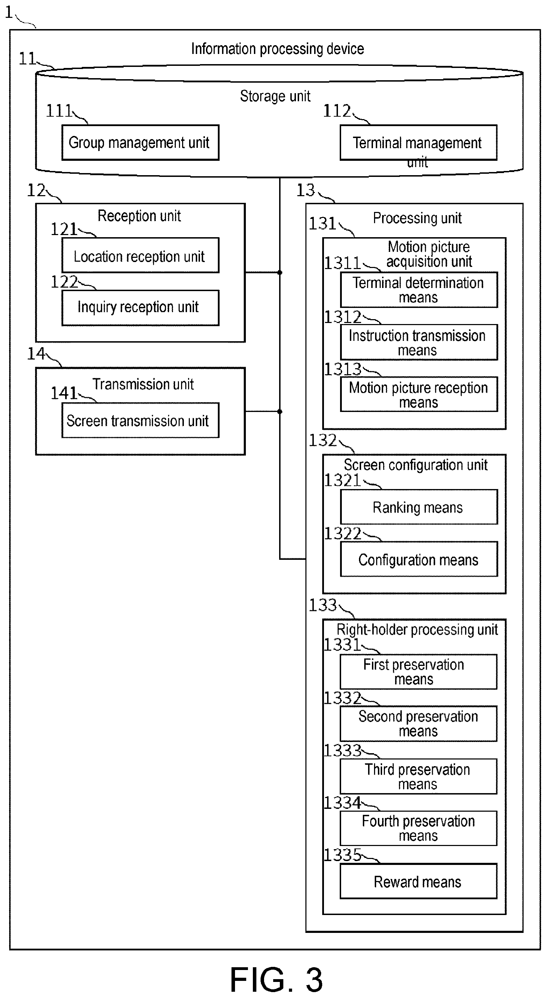

FIG. 2 is a block diagram of the information system A in the embodiment. FIG. 3 is a block diagram of the information processing device 1.

The information processing device 1 includes a storage unit 11, a reception unit 12, a processing unit 13, and a transmission unit 14. The storage unit 11 includes a group management unit 111 and a terminal management unit 112. The reception unit 12 includes a position reception unit 121 and an inquiry reception unit 122. The processing unit 13 includes a motion picture acquisition unit 131, a screen configuration unit 132, and a right-holder processing unit 133. The motion picture acquisition unit 131 includes a terminal determination means 1311, an instruction transmission means 1312, and a motion picture reception means 1313. The screen configuration unit 132 includes a ranking means 1321 and a configuration means 1322. The right-holder processing unit 133 includes a first preservation means 1331, a second preservation means 1332, a third preservation means 1333, a fourth preservation means 1334, and a reward means 1335. The transmission unit 14 includes a screen transmission unit 141.

The mobile terminal 2 includes a mobile storage unit 21, a mobile reception unit 22, a mobile processing unit 23, a mobile transmission unit 24, and a mobile output unit 25. The mobile processing unit 23 includes a position acquisition unit 231, an image capturing unit 232, an attribute value acquisition unit 233, and a configuration unit 234.

The user terminal 3 includes a user storage unit 31, a user reception unit 32, a user processing unit 33, a user transmission unit 34, a user reception unit 35, and a user output unit 36. The user processing unit 33 includes a location acquisition unit 331 and an inquiry acquisition unit 332.

### <Details of Components of Information Processing Device 1>

Various types of information are stored in the storage unit 11. The types of information are, for example, group information to be described later, terminal information to be described later, motion pictures, one or more attribute values associated with the motion pictures, and map information.

The attribute values are, for example, attribute values of the motion pictures. The attribute values of the motion pictures are, for example, environmental information. Environmental information is information relating to the environment in which the motion picture is captured. Environmental information is, for example, position information to be described later, time information, weather information, temperature information, seasonal information, and location identifiers. Time information is information that specifies the time at which the motion picture is captured. The time at which the motion picture is captured may be the time around the time when the motion picture is captured, and absolute accuracy may not be required. Time information may be in the form of, for example, time, year-month-day-hour, year-month-day-hour-minute, year-month-day-hour-minute-second, year-month-day, or month-day. In other words, the granularity of time indicated by the time information is irrelevant. Weather information is information that specifies the weather at the time of capturing at the location (or region) where the motion picture is captured. Weather information is, for example, "sunny," "rainy," "snowy," or "cloudy." Temperature information is information that specifies the temperature at the time of capturing at the location where the motion picture is captured. Temperature information is, for example, "25 degrees" or "30 degrees or higher." Seasonal information is information that specifies the season at the time of capturing at the location where the motion picture is captured. Seasonal information is, for example, "spring," "summer," "early summer," or "winter." Road attribute values are attribute values of the road on which the mobile terminal 2 moved.

Map information is used, for example, to acquire a location identifier corresponding to position information. Map information is, for example, in KIWI format, but the data structure is irrelevant. Position information is information that specifies a position. Position information is usually (latitude, longitude) or (latitude, longitude, altitude), but may also be a location identifier described later.

A location identifier is information that identifies a location. A location identifier is, for example, the name of a location or an ID of a location. However, a location identifier may also be (latitude, longitude) or (latitude, longitude, altitude).

One or more pieces of group information are stored in the group management unit 111. Group information is information that specifies multiple locations of comparison targets. Group information includes, for example, location identifiers of the respective locations of comparison targets. Group information includes, for example, position information of the respective locations of comparison targets.

Group information may be associated with user identifiers. In other words, the groups of multiple locations of comparison targets desired by respective users may be managed. The group information associated with a user identifier is, for example, information registered by a user identified by the user identifier.

One or more pieces of terminal information are stored in the terminal management unit 112. Terminal information is information relating to the mobile terminal 2. The terminal information here usually includes a terminal identifier that is an identifier of the mobile terminal 2, as well as terminal communication information. Terminal information has, for example, the latest position information of the mobile terminal 2. The mobile terminal 2 here is usually a terminal capable of transmitting motion pictures. Terminal information is associated with the mobile terminal 2. The terminal information in the terminal management unit 112 is accumulated, for example, through transmission of terminal communication information, etc., from the mobile terminals 2 in the case where the mobile terminals 2 are enabled to transmit motion pictures.

A terminal identifier is the information that identifies the mobile terminal 2. The terminal identifier may also be a right-holder identifier that identifies the right-holder who is a user of the mobile terminal 2. The terminal identifier is, for example, the ID of the mobile terminal 2, the user identifier of the user of the mobile terminal 2, the name of the mobile terminal 2, the IP address of the mobile terminal 2, or the MAC address of the mobile terminal 2.

The right-holder is a person who possesses a certain right related to the motion picture captured by the mobile terminal 2. The right-holder is, for example, the owner of the motion picture, the copyright-holder of the motion picture, the owner of the mobile terminal 2 that captures the motion picture, or the person with the right of disposing the motion picture. The right-holder is, for example, the initial right-holder of the motion picture. The right-holder is usually the owner of the mobile terminal 2, but may also be any person who owns the rights to the motion picture captured by the mobile terminal 2.

The right-holder identifier may also be a terminal identifier. The right-holder identifier is, for example, the ID of the right-holder, the name of the right-holder, the email address of the right-holder, or the telephone number of the right-holder. The ID of the right-holder is, for example, a user identifier.

Terminal communication information is the information for communicating with the mobile terminal 2. Terminal communication information is, for example, the IP address of the mobile terminal 2, the MAC address of the mobile terminal 2, or the ID of a communication application installed on the mobile terminal 2.

The reception unit 12 receives various information or instructions. The various information or instructions are, for example, position information, inquiries described later, motion pictures, or motion pictures associated with one or more attribute values. Motion pictures associated with one or more attribute values are appropriately referred to as additional motion pictures. Motion picture serves as a concept that includes additional motion picture.

The position reception unit 121 receives position information from multiple mobile terminals 2. The mobile terminals 2 here are terminals capable of transmitting motion pictures. Terminals capable of transmitting motion pictures are, for example, terminals capturing motion pictures, but may also be terminals that start capturing in response to receiving instructions from the information processing device 1. The position reception unit 121 usually continuously receives position information from the respective mobile terminals 2. Receiving continuously means receiving two or more times, and is, for example, receiving constantly, receiving periodically, or receiving irregularly but 22 or more times.

The inquiry reception unit 122 receives inquiries from one or more user terminals 3, respectively. An inquiry can be considered as a request for transmitting a screen based on the motion pictures of multiple locations of the comparison targets. The inquiry includes identification information.

Identification information is information for specifying multiple comparison target positions. The identification information is, for example, location identifiers that identify each of the locations (e.g., location names), position information that specifies each of the locations (e.g., (latitude, longitude)), one location identifier, a location identifier of a location where the user terminal 3 exists, one piece of position information, position information indicating a position where the user terminal 3 exists, or a user identifier.

The processing unit 13 performs various processes. The various processes are, for example, processes performed by the motion picture acquisition unit 131, the screen configuration unit 132, or the right-holder process unit 133.

The motion picture acquisition unit 131 acquires the motion pictures transmitted from the mobile terminals 2 present at the respective locations identified by the identification information. The method by which the motion picture acquisition unit 131 acquires the motion pictures is, for example, any one of the following (1) and (2).
(1) In the case where the motion picture acquisition unit 131 determines the mobile terminals 2 that transmit motion pictures:
   The motion picture acquisition unit 131 transmits the transmission instructions for motion pictures to the mobile terminals 2 present at the respective locations identified by the identification information, and receives motion pictures from the mobile terminals 2 in response to transmitting the transmission instructions. The motion picture acquisition unit 131 in such case includes the terminal determination means 1311, the instruction transmission means 1312, and the motion picture reception means 1313 as follows.

The terminal determination means 1311 determines the mobile terminals 2 present at the respective locations identified by the identification information by using the position information of the mobile terminals 2 received by the position reception unit 121.

The instruction transmission means 1312 transmits the transmission instruction to the respective mobile terminals 2 determined by the terminal determination means 1311. The transmission instruction is an instruction for transmitting motion pictures.

The motion picture reception means 1313 receives the motion pictures from the respective multiple mobile terminals 2 to which the transmission instruction is transmitted.

(2) In the case where the mobile terminal 2 determines whether to transmit the motion picture:
The motion picture acquisition unit 131 includes, for example, the instruction transmission means 1312 and the motion picture reception means 1313.

The instruction transmission means 1312 transmits an inquiry based on the identification information to multiple mobile terminals 2. The mobile terminals 2 here are multiple mobile terminals 2 capable of transmitting motion pictures. The mobile terminals 2 here are generally all mobile terminals 2 capable of transmitting motion pictures. The mobile terminals 2 here are, for example, multiple mobile terminals 2 managed by the terminal management unit 112 as being in a state capable of transmitting motion pictures.

The inquiry transmitted to the mobile terminals 2 and based on the identification information may be the same information as the received inquiry, or may be different information. The inquiry based on the identification information may have the received identification information, may have multiple pieces of position information corresponding to the received identification information, or may have multiple location identifiers corresponding to the received identification information.

The motion picture reception means 1313 receives the motion pictures from the respective mobile terminals 2 determined as corresponding to the identification information in response to the transmission of the inquiry.

The screen configuration unit 132 forms one screen based on the motion pictures acquired by the motion picture acquisition unit 131. The screen may have multiple motion pictures. The screen may have all motion pictures acquired by the motion picture acquisition unit 131. However, a screen may also be a screen having a thumbnail image based on one frame forming each motion picture, or may also be a screen having a portion (for example, one) of the motion pictures and a thumbnail image based on one frame forming each of one or more other motion pictures. A partial region (window) in one screen may include one or more motion pictures. Also, forming a screen means acquiring screen information that serves as the basis for displaying the screen. The screen information is described in, for example, HTML, XML, etc., but the format is irrelevant.

The ranking means 1321 acquires one or more attribute values of each of the motion pictures, and ranks the motion pictures by using the attribute values. The attribute values are, for example, analysis results of the motion pictures and distances from the user terminal 3. The analysis results of the motion pictures are, for example, prices of specific products in the motion pictures, road congestion levels based on the number of automobiles. The distance from the user terminal 3 is a distance acquired by using the position information corresponding to the motion picture and the position information transmitted from the user terminal 3.

The ranking means 1321, for example, performs an object recognition process on one frame in motion pictures capturing the inside of each of multiple supermarkets, determines objects in the frame, and acquires the prices, which are numbers near the objects, through a text recognition process. Next, the ranking means 1321, for example, assigns ranks (for example, any natural number of 1 or more) to the motion pictures in the order from the lowest price for the same object.

The ranking means 1321, for example, performs an object recognition process on one frame in each of the motion pictures of multiple different highways, acquires the number of automobiles or distance between automobiles in the frame, and acquires road congestion (level) by using the number of the automobiles or the distance. The ranking means 1321, for example, refers to a correspondence table including multiple pieces of correspondence information having the ranges of the number of automobiles and the levels, or a correspondence table including multiple correspondence information having the ranges of the distances between automobiles and the levels, and acquires the level. Next, the ranking means 1321, for example, assigns the level to each motion picture.

The ranking means 1321, for example, calculates the distance for each of the mobile terminals 2 by using the position information associated with the motion picture transmitted from the mobile terminal 2 and the position information transmitted from the user terminal 3. Next, the ranking means 1321, for example, assigns a rank to each motion picture transmitted from the mobile terminal 2 in the order from the shortest distance.

The configuration means 1322 forms one screen based on the respective motion pictures. The configuration means 1322 forms one screen according to the rank of each of the motion pictures. The screen according to the ranking is, for example, a screen including multiple motion pictures sorted in the order of ranks, or a screen in which the rank of each motion picture is clearly indicated. As described above, the screen may include all the motion pictures, but may also include the thumbnail images using still images forming the respective motion pictures, or may include only portions of the motion pictures.

The right-holder process unit 133 performs a right-holder process. The right-holder process is a process related to the right-holder identified by a right-holder identifier associated with a motion picture. The motion picture here is, for example, a motion picture acquired by the motion picture acquisition unit 131. The motion picture here is, for example, a motion picture received by the reception unit 12.

The right-holder process unit 133, for example, performs a process in response to the screen transmission unit 141 transmitting a screen, and performs the right-holder process which is a process related to the right-holder identified by the right-holder identifier associated with each of the motion pictures corresponding to the screen. The right-holder process is, for example, a first preservation process to be described later, a second preservation process to be described later, a third preservation process to be described later, a fourth preservation process to be described later, and a reward process to be described later.

The right-holder identifier associated with the motion picture is, for example, a right-holder identifier corresponding to the mobile terminal 2 that transmits the motion picture, or an identifier of a user of the user terminal 3 to which the motion picture is transmitted. The user of the user terminal 3 is a user who transmits the inquiry.

The first preservation means 1331 performs a first preservation process that accumulates the motion pictures received by the reception unit 12 in association with an attribute value set corresponding to the motion pictures. The attribute value set includes one or more attribute values. The first preservation means 1331, for example, accumulates the motion pictures in a blockchain.

The second preservation means 1332 performs a second preservation process that accumulates the motion pictures received by the reception unit 12 in association with the right-holder identifiers corresponding to the motion pictures. The second preservation means 1332, for example, accumulates the motion pictures in a blockchain.

The third preservation means 1333 accumulates the right-holder identifier that identifies the user of the user terminal 3 in association with the motion picture. The third preservation means 1333, for example, accumulates the right-holder identifier in the storage unit 11 or a blockchain. The third preservation means 1333 may accumulate a right-holder identifier that identifies the user of the user terminal 3 for multiple motion pictures received by the reception unit 12. The third preservation means 1333 may accumulate temporally continuous screens (motion pictures of screens) transmitted by the screen transmission unit 141 with respect to the right-holder identifiers.

The destination where the motion pictures are accumulated is, for example, the storage unit 11, but may also be other devices, other devices constituting a blockchain, etc.

The fourth preservation means 1334 performs a fourth preservation process that accumulates preservation information. The preservation information includes access information for accessing the accumulated motion pictures. The order between the accumulation of the motion pictures and the fourth preservation process with respect to the preservation information corresponding to the motion pictures is irrelevant.

The fourth preservation means 1334, for example, performs the fourth preservation process that accumulates preservation information including access information for accessing the motion pictures acquired by the motion picture acquisition unit 131. The fourth preservation means 1334, for example, performs the fourth preservation process that accumulates preservation information including the access information for accessing the motion pictures of the screens transmitted by the screen transmission unit 141 to the user terminal 3.

The fourth preservation means 1334 may accumulate the preservation information in a blockchain. That is, the fourth preservation means 1334 may accumulate the preservation information in a distributed ledger of a blockchain. The fourth preservation means 1334 registers the preservation information as a non-fungible token (NFT). The fourth preservation means 1334 registers the preservation information in a distributed file system in an inter planetary file system (IPFS) network.

The preservation information is the information for ensuring the originality of the motion pictures. It can be said that preservation information is the header information of motion pictures. The preservation information is, for example, the access information and the attribute value set. The preservation information may have, for example, one or more right-holder identifiers. In the case where the preservation information has multiple right-holder identifiers, the right-holders may share the motion pictures, or the right-holder identifiers may be right-holder history information. Right-holder history information is a set of right-holder identifiers and is information indicating the history of right-holders. Through the fourth preservation process, the originality of the preservation information of registered motion pictures (which may be the motion pictures of screens) can be ensured. By ensuring the originality of the preservation information, the originality of the motion pictures corresponding to the preservation information is also ensured. Access information is the information for accessing the motion picture. The access information is information that specifies the accumulation destination of the motion picture. The access information is, for example, URL or URI.

The reward means 1335 performs a reward process for each right-holder identified by the right-holder identifier associated with the motion picture acquired by the motion picture acquisition unit 131. Such right-holder identifier is, for example, a holder of the mobile terminal 2.

The reward process is a process of giving rewards. The reward process is, for example, a process of increasing points managed with respect to one or more right-holder identifiers associated with the motion pictures. The reward process is, for example, a process of depositing money to the right-holder identified by each of one or more right-holder identifiers associated with the motion picture. The reward process is, for example, a process of transmitting motion pictures or other contents to the user terminals 3 of the right-holders identified by using the one or more right-holder identifiers associated with the motion pictures. The reward process may be any process as long as benefits are given to the right-holder identified by each of the one or more right-holder identifiers associated with the motion pictures, and the contents thereof do not matter. Also, the rewards are, for example, money, points, goods, contents, etc., and the contents thereof do not matter.

The reward means 1335 acquires one or more attribute values of the motion picture corresponding to the screen transmitted by the screen transmission unit 141, determines the reward with respect to the right-holder of the motion picture by using the one or more attribute values, and performs the reward process which is a process of giving the reward.

The one or more attribute values here are, for example, the data amount of motion picture, the time of motion picture, the number of frames of motion picture, and the resolution of motion picture.

The reward means 1335 may acquire the reward amount corresponding to a service identifier that identifies the service performed with respect to the motion picture as the target, and performs the reward process which is a process of giving the reward corresponding to the reward amount. The service identifier is, for example, "viewing" or "purchase". In such case, for example, the storage unit 11 stores the reward amount corresponding to the service identifier, or information for determining the reward amount corresponding to the service identifier.

The reward means 1335, for example, acquires the reward amount by using one or more pieces of information among one or more attribute values and service identifiers, and performs the reward process which is a process of giving the reward corresponding to the reward amount. In such case, for example, the storage unit 11 stores calculation formulas or correspondence tables corresponding to multiple respective service identifiers. The calculation formula is a formula that calculates the reward amount by using the one or more attribute values as parameters. The correspondence table is a table having multiple correspondence information that manages the reward amounts corresponding to one or more attribute values.

The reward means 1335 usually performs a process of charging the user who has enjoyed a service related to a target motion picture for the reward. The process of charging the user for the reward is, for example, a process of charging the user for the amount of the acquired reward. The process of charging the user for the rewards is, for example, a process of charging the user for the amount of the acquired reward and the profit obtained by the operating side of the information processing device 1. The process of charging the user for the reward is, for example, a process of reducing points corresponding to users who has enjoyed the service, a settlement process using the credit card number of the user etc. The user who has enjoyed the service is usually the user of the user terminal 3.

The transmission unit 14 transmits various information or instructions. The various information or instructions are, for example, screens.

The screen transmission unit 141 transmits one screen acquired by the screen configuration unit 132 to the user terminal 3 that transmits the inquiry. The screen transmission unit 141 usually transmits a screen including the motion pictures captured at multiple comparison target positions to the user terminal 3.

### <Details of Components of Mobile Terminal 2>

The mobile storage unit 21 stores various information. The various information is, for example, motion picture, attribute value set, right-holder identifier, camera attribute value, and map information. Camera attribute values are attribute values of camera. Camera attribute values are, for example, angle of view, direction information, and resolution.

One or more still images that form a motion picture are associated with, for example, one or more attribute values that form an attribute value set. The one or more attribute values may be associated with all of the still images, may be associated with some of the still images, or may be associated with multiple still images.

The mobile reception unit 22 receives various information and instructions. The various information and instructions are, for example, transmission instructions and inquiries.

The mobile processing unit 23 performs various processes. The various processes are, for example, processes performed by the position acquisition unit 231, the image capturing unit 232, the attribute value acquisition unit 233, and the configuration unit 234.

The mobile processing unit 23 determines whether the position information acquired by the position acquisition unit 231 matches the inquiry received by the mobile reception unit 22. The mobile processing unit 23 determines whether any one or more location identifiers or any one or more pieces of position information included in the inquiry satisfy a location condition with respect to the position information acquired by the position acquisition unit 231. The location condition is that two locations are the same or close. The location condition is, for example, that the location indicated by the position information acquired by the position acquisition unit 231 and the location identified by the location identifier or position information included in the inquiry are the same, that the distance between the location indicated by the position information acquired by the position acquisition unit 231 and the location identified by the location identifier or position information included in the inquiry is within a threshold or smaller than a threshold, etc.

The position acquisition unit 231 acquires position information. The position acquisition unit 231 usually acquires position information that identified the current position of the mobile terminal 2. The position acquisition unit 231 acquires position information by, for example, a GPS receiver. However, the means, algorithm, etc., by which the position acquisition unit 231 acquires position information is irrelevant.

The image capturing unit 232 captures the motion picture. The image capturing unit 232 captures the motion picture, for example, while the mobile terminal 2 is moving. The captured motion pictures may be associated with the position information acquired by the position acquisition unit 231. The captured motion pictures may be associated with one or more attribute values acquired by the attribute value acquisition unit 233 to be described later.

The image capturing unit 232 may accumulate the captured motion pictures in the mobile storage unit 21. In the case where the motion pictures are accumulated in the mobile storage unit 21 with a limited storage capacity, the image capturing unit 232 may overwrite new motion pictures in regions where old motion pictures are stored. That is, the structure of the mobile storage unit 21 may be a ring buffer structure.

The image capturing unit 232 may also start capturing the motion picture in response to receiving a transmission instruction, for example. The image capturing unit 232 may start capturing the motion picture in the case where it is determined that the location condition matches the received inquiry, for example. The image capturing unit 232 starts capturing the motion picture in the case of receiving input of a capturing instruction from a user, for example.

The attribute value acquisition unit 233 acquires one or more camera attribute values including the direction information indicating a direction in which the image capturing unit 232 captures. The attribute value acquisition unit 233 may acquire one or more attribute values including a camera attribute value.

The attribute value acquisition unit 233 acquires one or more attribute values, for example. The one or more attribute values may also be referred to as an attribute value set. The attribute value acquisition unit 233 acquires time information from a clock (not shown) during capturing, for example. The attribute value acquisition unit 233 acquires time information constantly, at a predetermined interval, or in the case where an acquisition condition is satisfied, for example. The attribute value acquisition unit 233 acquires the time information from a clock (not shown) during capturing and acquires season information corresponding to the time information, for example. The attribute value acquisition unit 233 acquires weather information corresponding to position information from a server (not shown), for example. The attribute value acquisition unit 233 acquires weather information constantly, at a predetermined interval, or in the case where an acquisition condition is satisfied, for example. The attribute value acquisition unit 233 acquires temperature information during capturing, for example. The mobile processing unit 23 acquires temperature information corresponding to position information from a server (not shown), for example. The mobile processing unit 23 acquires temperature information from a temperature sensor installed to a mobile object, for example. The mobile processing unit 23 acquires temperature information constantly, at a predetermined interval, or in the case where an acquisition condition is satisfied, for example. The acquisition condition is, for example, a case where motion picture analysis results satisfy a predetermined condition.

The attribute value acquisition unit 233 acquires a location identifier corresponding to the position information acquired by the position acquisition unit 231 from map information and associates the location identifier with the motion picture, for example. The attribute value acquisition unit 233 acquires a location identifier that corresponds to the position information acquired by the position acquisition unit 231 and satisfies a specific condition from the map information, and associates the location identifier with the motion picture, for example. The specific condition is, for example, that the location identifier is a specific type of location identifier (for example, station name, building name).

Associating with a motion picture may refer to association with a frame forming the motion picture or association with the entire motion picture.

The attribute value acquisition unit 233 acquires one or more tags with respect to the motion picture captured by the image capturing unit 232 and associates the tags with the motion picture, for example. The tags can also be said as attribute values.

The attribute value acquisition unit 233 analyzes the motion picture captured by the image capturing unit 232 and acquires one or more tags with respect to the motion picture, for example.

The attribute value acquisition unit 233 acquires one or more tags by using one or more mobile object attribute values acquired during capturing by the image capturing unit 232, for example. The mobile object attribute value is, for example, CAN data.

The attribute value acquisition unit 233 determines one or more still images that match the motion picture tag condition and acquires a tag paired with the motion picture tag condition, for example. Additionally, the attribute value acquisition unit 233 may associate the tag with the one or more still images. The still images are frames constituting the motion picture.

For example, in the case where the motion picture tag condition is: "the number of automobiles with front-to-back intervals falling within a threshold is equal to or greater than a threshold & the moving speed of automobiles is equal to or less than a threshold" and the tag paired with the motion picture tag condition is "traffic jam", the attribute value acquisition unit 233 analyzes frames included in the motion picture, recognizes multiple automobiles, and acquires intervals between the respective automobiles. Additionally, the attribute value acquisition unit 233 acquires the number of automobiles whose intervals are within the threshold. Furthermore, the attribute value acquisition unit 233 acquires the moving distance of one automobile in multiple frames and the frame rate, and acquires the speed of the automobile. Then, the attribute value acquisition unit 233 determines whether the motion picture tag condition is satisfied by using the number of automobiles whose intervals are within the threshold and the speed of the automobiles. In the case where the motion picture tag condition is satisfied, the attribute value acquisition unit 233 acquires the tag "traffic jam" paired with the motion picture tag condition. Additionally, the attribute value acquisition unit 233 may associate the tag "traffic jam" with the analyzed frames of the analyzed motion picture.

The attribute value acquisition unit 233 determines one or more mobile object attribute values that match the attribute value tag condition and tags paired with the attribute value tag conditions, for example. Additionally, the attribute value acquisition unit 233 may associate the tags with the motion picture paired with the one or more mobile object attribute values.

For example, in the case where the attribute value tag condition is "driving time at a speed less than 30km is 10 minutes or more & the proportion of the speed less than 30% during the driving time is 80% or more" and the tag paired with the attribute value tag condition is "traffic jam," the attribute value acquisition unit 233 uses the speed history included in the CAN data associated with the respective fields included in the motion picture to detect CAN data that matches the attribute value tag condition, acquires the tag "traffic jam" paired with the attribute value tag condition, and associates the tag with the field corresponding to the CAN data. The CAN data associated with each field included in the motion picture is CAN acquired at the same timing as the timing when the field is captured.

The configuration unit 234 associates the acquired position information with the motion picture to acquire an additional motion picture. The configuration unit 234 acquires the additional motion picture in which the one or more camera attribute values acquired by the attribute value acquisition unit 233 are also associated with the motion picture, for example. The configuration unit 234 acquires an additional motion picture that also associates one or more attribute values acquired by the attribute value acquisition unit 233 with the motion picture, for example. The additional motion picture typically includes position information.

The mobile transmission unit 24 transmits various types of information to the information processing device 1. The various types of information are, for example, motion pictures and additional motion pictures. The mobile transmission unit 24 may continuously transmit the motion pictures acquired by the image capturing unit 232 to the information processing device 1. In such case, the motion pictures are typically associated with position information and time information.

The mobile transmission unit 24 transmits the motion picture acquired by the image capturing unit 232 to the information processing device 1 in response to receiving a transmission instruction, for example.

The mobile transmission unit 24 transmits the motion picture acquired by the image capturing unit 232 to the information processing device 1 in the case where the received inquiry is determined as matching the location condition, for example.

The mobile output unit 25 outputs various types of information. The various types of information are, for example, motion picture, additional motion picture, and attribute value set.

The output is a concept that includes display on a display, projection using a projector, printing with a printer, audio output, transmission to an external device, storage in a recording medium, delivery of processing results to other processing devices or other programs, etc.

### <Details of Components of User Terminal 3>

Various types of information are stored in the user storage unit 31. The various types of information are, for example, user identifier, motion picture, inquiry, and map information.

The user reception unit 32 receives various instructions and information. The various instructions and information are, for example, inquiries. The inquiries received by the user reception unit 32 include, for example, identification information.

Reception is a concept that includes receiving information input from an input device such as a keyboard, a mouse, and a touch panel, reception of information transmitted via a wired or wireless communication line, reception of information read from a recording medium such as an optical disk, a magnetic disk, and a semiconductor memory, etc.

The user reception unit 32 receives, for example, an inquiry from the user. Such inquiry is an instruction to acquire the motion pictures of multiple comparison target positions. The inquiry received from the user may be only pressing of a button or selection of a menu item, may include input of one or more location identifiers, or may include input of one or more pieces of position information.

The user reception unit 32 acquires, for example, an inquiry including the position information in the case where the position information acquired by the user processing unit 33 is the specific position information (for example, a point before a branching point of highways such as the Tomei Expressway and the Shin-Tomei Expressway). The acquisition of such inquiry may also be considered as reception of inquiry.

The user processing unit 33 performs various processes. The various processes are, for example, processes performed by the location acquisition unit 331 and the inquiry acquisition unit 332. The various processes are, for example, processes to create a data structure for transmitting various instructions and information received by the user reception unit 32. The various processes are, for example, processes to create a structure for transmitting information received by the user reception unit 35.

The location acquisition unit 331 acquires a location identifier that specifies the location of the user terminal 3. The location identifier is, for example, a location name or position information. The location acquisition unit 331 acquires, for example, the position information by using a GPS receiver and acquires a location identifier corresponding to the position information from the map information. The map information may be provided by the user storage unit 31 or may be provided an external device.

The inquiry acquisition unit 332 acquires, for example, an inquiry received by the user reception unit 32.

The inquiry acquisition unit 332 acquires, for example, an inquiry including identification information using the location identifier acquired by the location acquisition unit 331. The inquiry acquisition unit 332 may acquire an inquiry accepted by the user reception unit 32.

The inquiry acquisition unit 332 acquires, for example, a location identifier input by the user, and acquires an inquiry having the location identifier.

The inquiry acquisition unit 332 acquires, for example, a user identifier of the user storage unit 31, and acquires an inquiry having the user identifier.

The user transmission unit 34 transmits the inquiry acquired by the inquiry acquisition unit 332 to the information processing device 1.

The user reception unit 35 receives from the information processing device 1 one screen formed by using the motion pictures of multiple locations including a location identified by the location identifier.

The user output unit 36 outputs the screen received by the user reception unit 35. The screen includes the motion pictures of multiple comparison locations.

The storage unit 11, the group management unit 111, the terminal management unit 112, the mobile storage unit 21, and the user storage unit 31 may be non-volatile recording media, but can also be realized with volatile recording media.

The process by which information is stored in the storage unit 11, etc., is irrelevant. For example, the information may be stored in the storage unit 11, etc., via a recording medium, the information transmitted via a communication line or the like may be stored in the storage unit 11, etc., or the information input via an input device may be stored in the storage unit 11, etc.

The reception unit 12, the position reception unit 121, the inquiry reception unit 122, the motion picture reception means 1313, the mobile reception unit 22, and the user reception unit 35 are usually realized by wireless or wired communication means, but may also be realized by means for receiving broadcasts.

The processing unit 13, the motion picture acquisition unit 131, the screen configuration unit 132, the right-holder processing unit 133, the terminal determination means 1311, the ranking means 1321, the configuration means 1322, the first preservation means 1331, the second preservation means 1332, the third preservation means 1333, the fourth preservation means 1334, the reward means 1335, the mobile processing unit 23, the attribute value acquisition unit 233, the configuration unit 234, the user processing unit 33, and the inquiry acquisition unit 332 can usually be realized by a processor, a memory, etc. The processing procedures of the processing unit 13, etc., are usually realized by software, and the software is recorded on a recording medium such as ROM. However, these components may also be realized by hardware (dedicated circuits). The processor is a CPU, an MPU, a GPU, or the like, and the type is irrelevant.

The instruction transmission means 1312, the transmission unit 14, the screen transmission unit 141, the mobile transmission unit 24, and the user transmission unit 34 are usually realized by wireless or wired communication means, but may also be realized by broadcasting means.

The position acquisition unit 231 is realized by, for example, a GPS receiver.

The location acquisition unit 331 is realized by, for example, a communication module that receives a location identifier, or a GPS receiver.

The image capturing unit 232 is realized by a camera.

The mobile output unit 25 and the user output unit 36 may or may not be considered to include an output device such as a display, a speaker, etc. The mobile output unit 25 can be realized by driver software for an output device, or by driver software for an output device or an output device, etc.

The user reception unit 32 can be realized by a device driver for an input means such as a touch panel and a keyboard, control software for a menu screen, etc.

### <Operation>

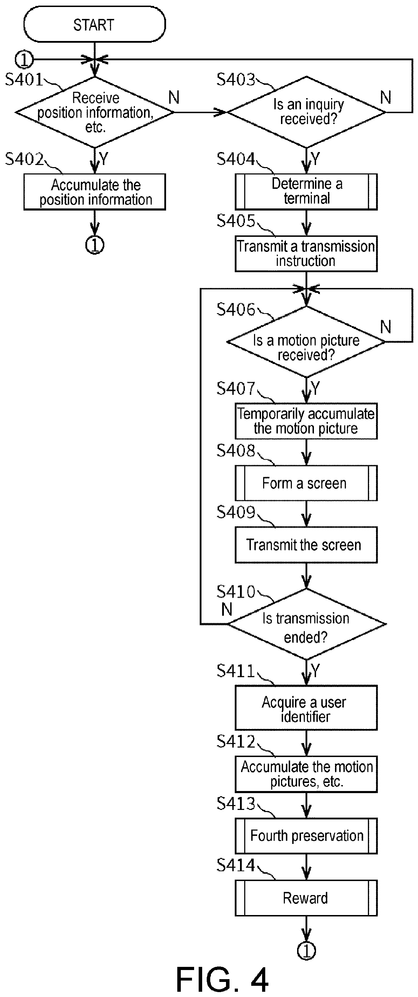

Next, an operation example of the information system A will be described. First, a first operation example of the information processing device 1 will be described by using the flowchart of FIG. 4. The first operation example is a case where the information processing device 1 determines the mobile terminal 2 that transmits motion pictures.

(S401) The position reception unit 121 determines whether position information, etc., is received from the mobile terminal 2. In the case where the position information, etc., the process goes to S402, and in the case where the position information, etc., is not received, the process goes to S403. The position information, etc., is, for example, the position information and the terminal identifier.

(S402) The processing unit 13 accumulates the position information received in S401 in the terminal management unit 112 in association with the terminal identifier. The process returns to S401.

(S403) The inquiry reception unit 122 determines whether an inquiry is received from the user terminal 3. In the case where an inquiry is received, the process goes to S404, and in the case where an inquiry is not received, the process returns to S401. The received inquiry is associated with the user identifier.

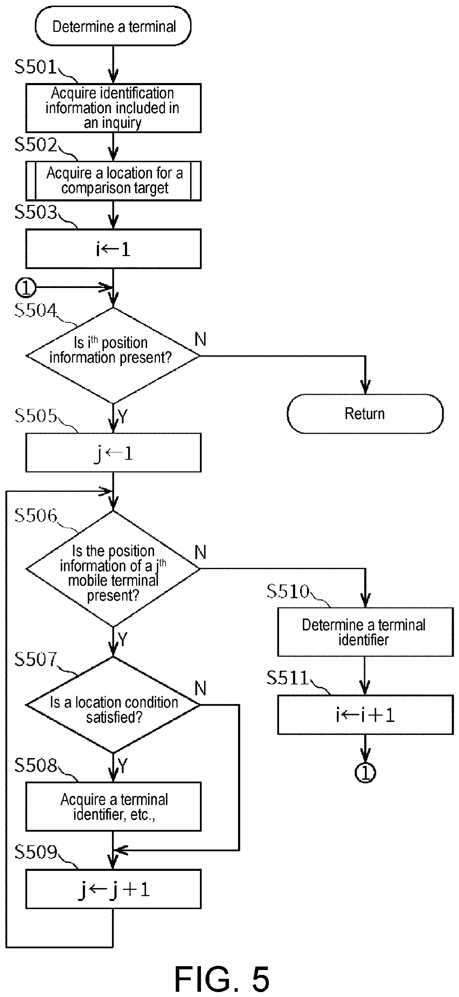

(S404) The terminal determination means 1311 determines multiple mobile terminals 2 that transmit motion pictures corresponding to the received inquiry. An example of such terminal determination process will be described with reference to the flowchart of FIG. 5.

(S405) The instruction transmission means 1312 acquires the terminal communication information of each of the mobile terminals 2 determined in S404 from the terminal management unit 112. Next, the instruction transmission means 1312 transmits a transmission instruction to the mobile terminal 2, which is the communication destination indicated by each piece of the terminal communication information. (S406) The motion picture reception means 1313 determines whether a motion picture is received from any one or more mobile terminals 2 to which the transmission instruction is transmitted. In the case where the motion picture is received, the process goes to S407, and in the case where the motion picture is not received, the process returns to S406. The motion picture reception means 1313 receives the motion picture with respect to the terminal identifier of the mobile terminal 2. The motion picture reception means 1313 may receive a motion picture paired with the values.

(S407) The motion picture acquisition unit 131 temporarily accumulates the motion picture received in S406 in a buffer (not shown) with respect to the terminal identifier. Also, the motion picture acquisition unit 131 may temporarily accumulate the motion picture received in S406 in a buffer (not shown) with respect to one or more attribute values.

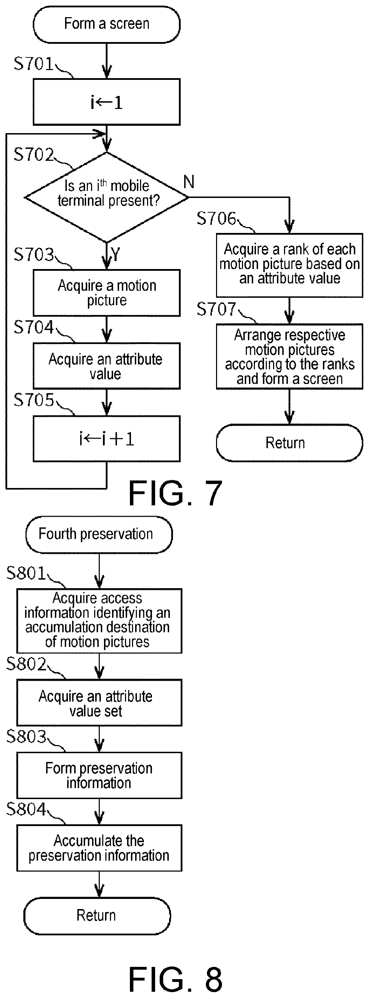

(S408) The screen configuration unit 132 forms a screen using the motion picture temporarily accumulated in the buffer (not shown). An example of such screen configuration process will be described by using the flowchart of FIG. 7.

(S409) The screen transmission unit 141 transmits the screen formed in S408 to the user terminal 3 that transmits the inquiry.

(S410) The processing unit 13 determines whether to end the transmission of the screen. In the case where the transmission of the screen is to be ended, the process goes to S411, and in the case where the transmission of the screen is not to be ended, the process returns to S406. The case where the transmission of the screen is to be ended is, for example, the case where an end instruction is received from the user terminal 3.

(S411) The third preservation means 1333 acquires the user identifier of the user terminal 3.

(S412) The third preservation means 1333 accumulates the motion picture of the screen continuously transmitted in S409, or multiple motion pictures serving as the basis for forming the screen, paired with the user identifier acquired in S411. By doing so, the right-holder of the motion picture of the screen continuously transmitted in S409 or the motion pictures serving as the basis for forming the screen becomes the user identified by the user identifier. That is, the user identifier is a right-holder identifier.

(S413) The fourth preservation means 1334 performs the fourth preservation process. An example of the fourth preservation process will be described by using the flowchart of FIG. 8.

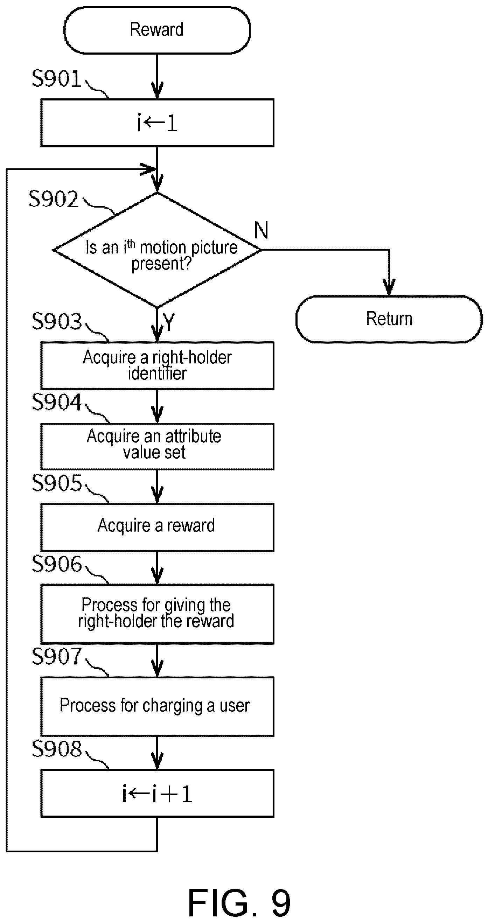

(S414) The reward means 1335 performs the reward process. The process returns to S401. An example of the reward process will be described by using the flowchart of FIG. 9.

In the flowchart of FIG. 4, the process ends by turning off the power or by using a process end interrupt.

Next, an example of the terminal determination process of S404 will be described by using the flowchart of FIG. 5.

(S501) The terminal determination means 1311 acquires identification information included in the received inquiry.

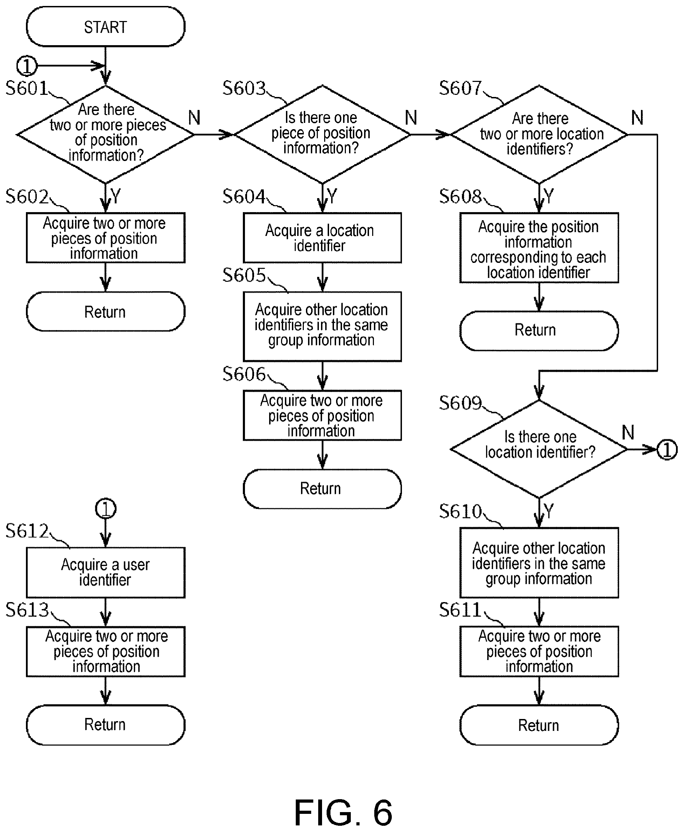

(S502) The terminal determination means 1311 acquires the position information of each of the comparison targets by using the identification information. An example of such comparison target position acquisition process will be described by using the flowchart of FIG. 6.

(S503) The terminal determination means 1311 substitutes 1 into a counter i.

(S504) The terminal determination means 1311 determines whether the position information of the i^{th} comparison target acquired in S502 is present. In the case where the i^{th} position information is present, the process goes to S505, and in the case where the i^{th} position information is not present, the process returns to the higher-order process.

(S505) The terminal determination means 1311 substitutes 1 into counter j.

(S506) The terminal determination means 1311 determines whether the position information of the j^{th} mobile terminal 2 is present in the terminal management unit 112. In the case where the j^{th} position information is present, the process goes to S506, and in the case where the j^{th} position information is not present, the process goes to S510.

(S507) The terminal determination means 1311 determines whether the position information of the i^{th} comparison target and the position information of the j^{th} mobile terminal 2 satisfy the location condition. In the case where the location condition is satisfied, the process goes to S508, and in the case where the location condition is not satisfied, the process goes to S510.

(S508) The terminal determination means 1311 acquires the terminal identifier and the position information of the j^{th} mobile terminal 2 from the terminal management unit 112, and accumulates the terminal identifier and the position information of the j^{th} mobile terminal 2 in a buffer not shown.

(S509) The terminal determination means 1311 increments the counter j by 1. The process returns to S506.

(S510) The terminal determination means 1311 determines a terminal identifier from the terminal identifiers accumulated in the buffer (not shown). The terminal determination means 1311 determines, for example, a terminal identifier paired with the position information of a position closest to the position indicated by the position information of the i^{th} comparison target. The terminal determination means 1311 determines, for example, one terminal identifier randomly. The algorithm for determining the terminal identifier is irrelevant.

(S511) The terminal determination means 1311 increments the counter i by 1. The process returns to S504.

Next, an example of the comparison target position acquisition process of S502 will be described by using the flowchart of FIG.6.

(S601) The terminal determination means 1311 determines whether the acquired identification information has multiple pieces of position information. In the case where the acquired identification information has multiple pieces of position information, the process goes to S602, and in the case where the acquired identification information does not have multiple pieces of position information, the process goes to S603. In the case where the identification information has multiple pieces of position information, the locations corresponding to the position information are the comparison target positions.

(S602) The terminal determination means 1311 acquires the multiple pieces of position information provided in the acquired identification information. The process returns to the higher-order process.

(S603) The terminal determination means 1311 determines whether the acquired identification information has one piece of position information. In the case where the acquired identification information has one piece of position information, the process goes to S604, and in the case where the acquired identification information does not have one piece of position information, the process goes to S607.

(S604) The terminal determination means 1311 acquires a location identifier (for example, location name, store name) corresponding to the position information provided in the acquired identification information by using the map information of the storage unit 11.

(S605) The terminal determination means 1311 acquires one or more of the respective location identifiers paired with the location identifiers acquired in S604, from the group information of the group management unit 111.

(S606) The terminal determination means 1311 acquires the position information paired with the respective one or more location identifiers acquired in S605 by using the map information of the storage unit 11. Also, the terminal determination means 1311 acquires the position information provided in the acquired identification information. The process returns to the higher-order process. From the above, the terminal determination means 1311 acquires multiple pieces of position information.

(S607) The terminal determination means 1311 determines whether the acquired identification information has multiple location identifiers. In the case where the acquired identification information has multiple location identifiers, the process goes to S608, and in the case where the acquired identification information does not have multiple location identifiers, the process goes to S609. In the case where the acquired identification information has multiple location identifiers, the locations identified by using the location identifiers are the comparison target positions.

(S608) The terminal determination means 1311 acquires the position information corresponding to each of the location identifiers provided in the acquired identification information by using the map information of the storage unit 11. The process returns to the higher-order process.

(S609) The terminal determination means 1311 determines whether the acquired identification information has a location identifier. In the case where the acquired identification information has a location identifier, the process goes to S610, and in the case where the acquired identification information does not have a location identifier, the process goes to S612.

(S610) The terminal determination means 1311 acquires the location identifier provided in the acquired identification information. The terminal determination means 1311 acquires one or more other location identifiers paired with the location identifier from the group information of the group management unit 111.

(S611) The terminal determination means 1311 acquires the position information corresponding to the location identifier provided in the acquired identification information and the one or more location identifiers acquired from the group management unit 111 by using the map information of the storage unit 11. The process returns to the higher-order process.

(S612) The terminal determination means 1311 acquires the user identifier provided in the acquired identification information.

(S613) The terminal determination means 1311 acquires multiple location identifiers paired with the user identifier from the group management unit 111. The terminal determination means 1311 acquires the position information corresponding to the acquired multiple location identifiers by using the map information of the storage unit 11. The process returns to the higher-order process.

In the following, an example of the screen configuration process of S408 will be described by using the flowchart of FIG. 7.

(S701) The screen configuration unit 132 substitutes 1 into the counter i.

(S702) The screen configuration unit 132 determines whether the i^{th} mobile terminal 2 among the mobile terminals 2 determined in S404 is present. In the case where the i^{th} mobile terminal 2 is present, the process goes to S703, and in the case where the i^{th} mobile terminal 2 is not present, the process goes to S706.

(S703) The screen configuration unit 132 acquires the motion picture that is transmitted by the i^{th} mobile terminal 2 and that is accumulated.

(S704) The screen configuration unit 132 acquires one or more attribute values corresponding to the i^{th} mobile terminal 2.

(S705) The screen configuration unit 132 increments the counter i by 1. The process returns to S702.

(S706) The ranking means 1321 acquires the rank of each of the mobile terminals 2 by using one or more attribute values corresponding to the mobile terminals 2.

(S707) The configuration means 1322 forms a screen in which the motion pictures acquired in S703 are arranged according to the ranking. The process returns to the higher-order process.

The screen is, for example, a screen in which the motion picture transmitted by each mobile terminal 2 is displayed within a frame corresponding to each mobile terminal 2 that transmits the motion picture.

Next, an example of the fourth preservation process of S413 will be described by using the flowchart of FIG. 8.

(S801) The fourth preservation means 1334 acquires access information that identifies the accumulation destination of the motion picture.

(S802) The fourth preservation means 1334 acquires an attribute value set corresponding to the accumulated motion picture.

(S803) The fourth preservation means 1334 forms the preservation information having the access information acquired in S801, the attribute value set acquired in S802, and the right-holder identifier of the motion picture. In the case where a new right-holder identifier is acquired, the fourth preservation means 1334 forms, for example, the preservation information including the new right-holder identifier and the original right-holder identifier.
(S804) The fourth preservation means 1334 accumulates the preservation information formed in S803. The process returns to the higher-order process.

In S804, in the case where the preservation information of the motion picture corresponding to the preservation information to be accumulated is accumulated, the preservation information is overwritten with the preservation information formed in S803. By doing so, for example, the transition of the right-holder of the motion picture can be managed. Also, the fourth preservation means 1334 accumulates the preservation information in, for example, a blockchain.

Next, an example of the reward process of S414 will be described by using the flowchart of FIG. 9.

(S901) The reward means 1345 substitutes 1 into counter i.

(S902) The reward means 1345 determines whether the i^{th} motion picture that serves as the basis for forming the screen is present. In the case where the i^{th} motion picture is present, the process goes to S903, and in the case where the i^{th} motion picture is not present, the process returns to the higher-order process.

(S903) The reward means 1345 acquires the right-holder identifier paired with the target motion picture.

(S904) The reward means 1345 acquires the attribute value set of the target motion picture.

(S905) The reward means 1345 acquires the reward amount by using the attribute value set acquired in S904.

(S906) The reward means 1345 performs a process to give a reward of the reward amount acquired in S905 to the right-holder identified by using the right-holder identifier acquired in S903.

(S907) The reward means 1345 performs a process to charge the user corresponding to the user terminal 3 that receives the screen.

(S908) The reward means 1345 increments the counter i by 1. The process returns to S902.

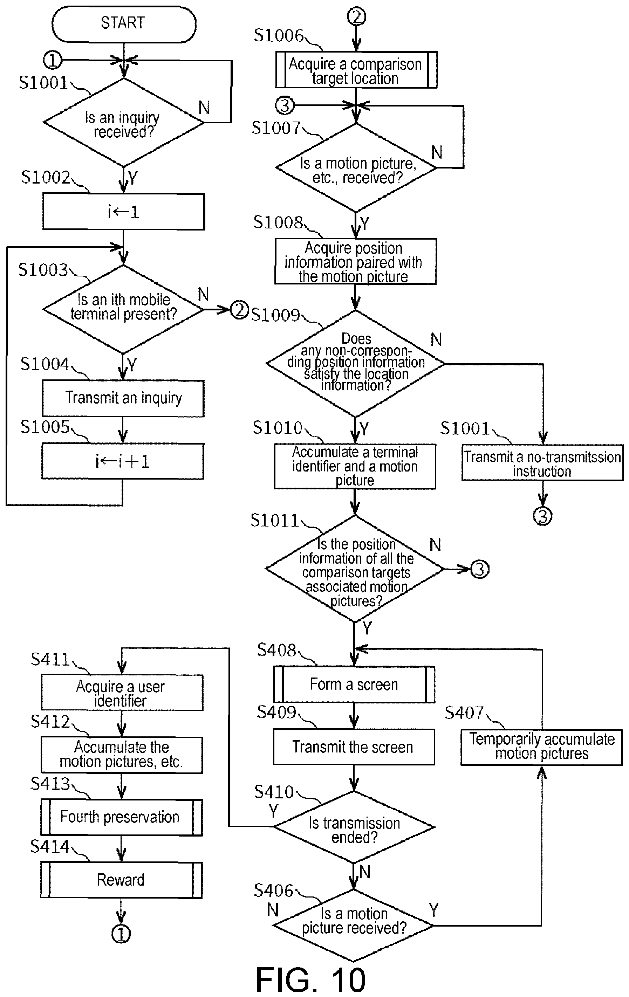

Next, a second operation example of the information processing device 1 will be described by using the flowchart of FIG. 10. The second operation example is a case where an inquiry is transmitted to all the mobile terminals 2 managed by the information processing device 1. In the flowchart of FIG. 10, the description of the same steps as in the flowchart of FIG. 4 is omitted.

(S1001) The inquiry reception unit 122 determines whether an inquiry has been received from the user terminal 3. In the case of receiving an inquiry, the process goes to S1002, and in the case of not receiving an inquiry, the process returns to S1001. The received inquiry is associated with a user identifier.

(S1002) The transmission unit 14 substitutes 1 into the counter i.

(S1003) The transmission unit 14 determines whether the i^{th} terminal information of the terminal management unit 112 is present. In the case where the i^{th} terminal information is present, the process goes to S1004, and in the case where the i^{th} terminal information is not present, the process goes to S1006.

(S1004) The transmission unit 14 acquires the terminal communication information included in the i^{th} terminal information from the terminal management unit 112. The transmission unit 14 transmits an inquiry to the i^{th} mobile terminal 2 identified by the terminal communication information.

(S1005) The transmission unit 14 increments the counter i by 1. The process returns to S1003.

(S1006) The terminal determination means 1311 acquires the position information of the respective comparison targets by using the identification information included in the received inquiry. An example of such comparison target position acquisition process is described by using the flowchart of FIG. 6.

(S1007) The motion picture reception means 1313 determines whether a motion picture, etc., received from any of the mobile terminals 2. In the case where a motion picture, etc., is received, the process goes to S1008, and in the case where a motion picture, etc., is not received, the process returns to S1007.

(S1008) The motion picture acquisition unit 131 acquires the position information paired with the motion picture received in S1007.

(S1009) The motion picture acquisition unit 131 determines whether the position information acquired in S1008 satisfies a location condition with any position information noncorresponding to the motion picture in the position information acquired in S1006. In the case where the location condition is satisfied, the process goes to S1010, and in the case where the location condition is not satisfied, the process goes to S1016.

(S1010) The motion picture acquisition unit 131 accumulates the terminal identifier and the motion picture in a buffer (not shown).

(S1011) Whether all of the pieces of the position information acquired in S1006 are associated with the motion pictures is determined. In the case where all of the pieces of the position information are associated with the motion pictures, the process goes to S408, and in the case where not all of the pieces of the position information are associated with the motion pictures, the process returns to S1007.

In the flowchart of FIG. 10, the process ends by turning off the power or by using a process end interrupt.

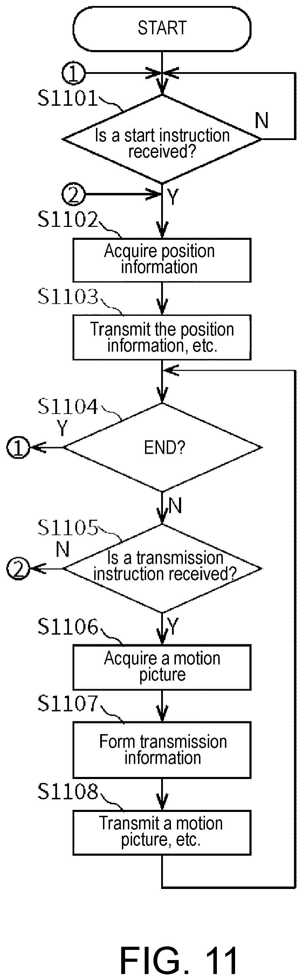

Next, a first operation example of the mobile terminal 2 will be described by using the flowchart of FIG. 11. The first operation example is a case where the information processing device 1 determines the mobile terminal 2 that transmits a motion picture. That is, the flowchart of the mobile terminal 2 in FIG. 11 corresponds to the flowchart of the information processing device 1 in FIG. 4.

(S1101) The mobile terminal 2 determines whether a start instruction is received. In the case where a start instruction is received, the process goes to S1102, and in the case where a start instruction is not received, the process goes to S1101.

(S1102) The position acquisition unit 231 acquires the current position information of the mobile terminal 2.

(S1103) The mobile processing unit 23 acquires a terminal identifier from the mobile storage unit 21. Next, the mobile processing unit 23 forms information having the terminal identifier and the position information acquired in S1102. The mobile transmission unit 24 transmits the information to the information processing device 1.

(S1104) The mobile processing unit 23 determines whether to end the process. In the case of ending the process, the process returns to S1101, and in the case of not ending the process, the process goes to S1105. The case of ending the process is, for example, a case where an end instruction is input from a user.

(S1105) The mobile reception unit 22 determines whether a transmission instruction is received from the information processing device 1. In the case where the transmission instruction is received, the process goes to S1106, and in the case where the transmission instruction is not received, the process returns to S1102.

(S1106) The image capturing unit 232 acquires a motion picture.

(S1107) The attribute value acquisition unit 233 acquires one or more attribute values. The configuration unit 234 acquires a terminal identifier from the mobile storage unit 21. The configuration unit 234 associates the one or more attribute values and the terminal identifier with the motion picture to form the information to be transmitted. Each frame forming the motion picture is associated with, for example, the time information acquired by the attribute value acquisition unit 233, the position information acquired by the position acquisition unit 231, etc.

(S1108) The mobile transmission unit 24 transmits the motion picture, etc., formed in S1107 to the information processing device 1. The process returns to S1104. The length and the data amount of the motion picture transmitted by the mobile transmission unit 24 each time do not matter.

In the flowchart of FIG. 11, the image capturing unit 232 starts image capturing in response to reception of the transmission instruction. However, the image capturing unit 232 may also start image capturing in response to reception of the start instruction.

Also, in the flowchart of FIG. 11, the process ends by turning off the power or by using a process end interrupt.

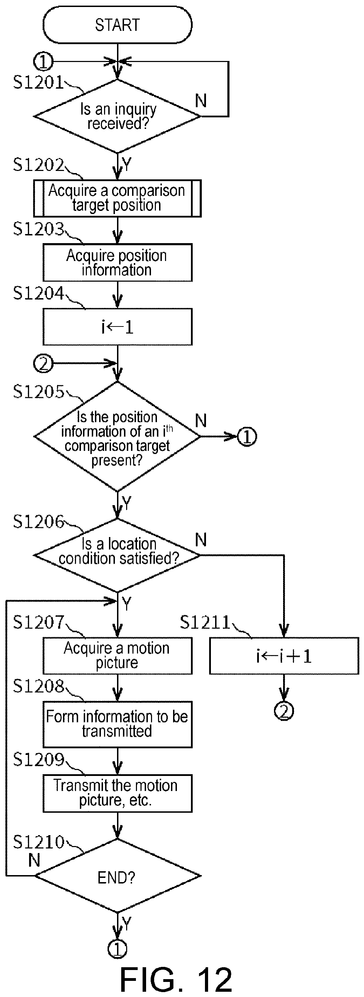

Then, a second operation example of the mobile terminal 2 will be described by using the flowchart of FIG. 12. The second operation example is a case where the mobile terminal 2 determines whether to transmit a motion picture to the information processing device 1. That is, the flowchart of the mobile terminal 2 in FIG. 12 corresponds to the flowchart of the information processing device 1 in FIG. 10.

(S1201) The mobile reception unit 22 determines whether an inquiry is received from the information processing device 1. In the case of receiving an inquiry, the process goes to S1202, and in the case of not receiving an inquiry, the process returns to S1201.

(S1202) The mobile processing unit 23 performs a comparison target position acquisition process. The comparison target position acquisition process is the same as the process described in the flowchart of FIG. 6.

(S1203) The position acquisition unit 231 acquires the current position information of the mobile terminal 2.

(S1204) The mobile processing unit 23 substitutes 1 into counter i.

(S1205) The mobile processing unit 23 determines whether i^{th} position information is present among the pieces of position information of the comparison targets acquired in S1202. In the case where the i^{th} position information is present, the process goes to S1206, and in the case where the i^{th} position information is not present, the process returns to S1201.

(S1206) The mobile processing unit 23 determines whether the position information acquired in S1203 and the i^{th} position information satisfy the location condition. In the case where the location condition is satisfied, the process goes to S1207, and in the case where the location condition is not satisfied, the process goes to S1211.

(S1207) The image capturing unit 232 acquires a motion picture.

(S1208) The attribute value acquisition unit 233 acquires one or more attribute values. The configuration unit 234 acquires a terminal identifier from the mobile storage unit 21. The configuration unit 234 associates one or more attribute values and the terminal identifier with the motion picture to form the information to be transmitted.

Each frame forming the motion picture is associated with, for example, the time information acquired by the attribute value acquisition unit 233, the position information acquired by the position acquisition unit 231, etc.

(S1209) The mobile transmission unit 24 transmits the motion picture, etc., formed in S1208 to the information processing device 1.

(S1210) The mobile processing unit 23 determines whether to end the transmission of the motion picture, etc. In the case of ending the transmission of the motion picture, etc., the process returns to S1201, and in the case of not ending the transmission of the motion picture, etc., the process returns to S1207. The case of ending the transmission of the motion picture, etc., is, for example, the case of receiving a no-transmission instruction from the information processing device 1, or the case of receiving an end instruction from the user of the mobile terminal 2.

(S1211) The mobile processing unit 23 increments the counter i by 1. The process returns to S1205.

In the flowchart of FIG. 12, before acquiring the motion picture in S1207, an inquiry may be made to the information processing device 1 on whether to transmit the motion picture. In such case, the mobile transmission unit 24 transmits an inquiry including, for example, the position information or other attribute values to the information processing device 1. Then, the information processing device 1 determines one mobile terminal 2 that transmits the motion picture based on the position information and other attribute values for each comparison location in response to the inquiry received from the current position information of the mobile terminals 2. Such a determination method may be the same operation as the operation of S510 in the flowchart of FIG. 5.

Also, in the flowchart of FIG. 12, the process by turning off the power or by using a process end interrupt.

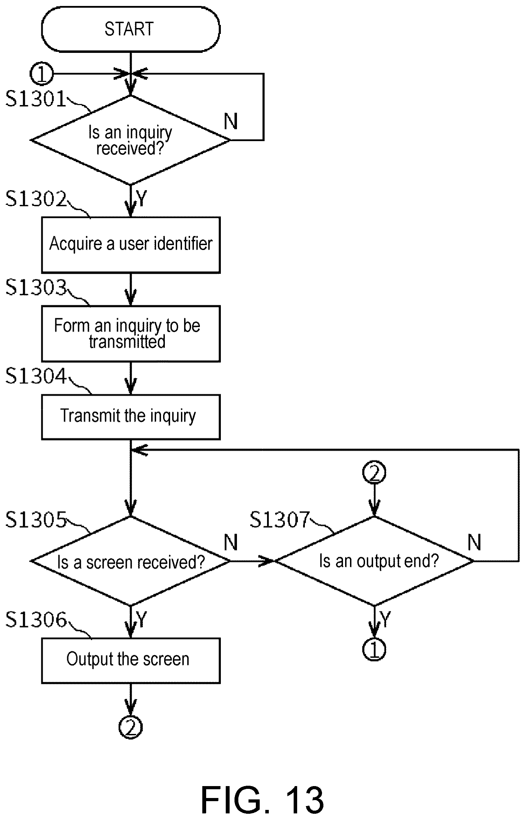

Next, an operation example of the user terminal 3 will be described by using the flowchart of FIG. 13.

(S1301) The user reception unit 32 determines whether an inquiry is received. In the case of accepting the inquiry, the process goes to S1302, and in the case of not accepting the inquiry, the process returns to S1301.

(S1302) The user processing unit 33 acquires the user identifier from the user storage unit 31.

(S1303) The inquiry acquisition unit 332 forms an inquiry to be transmitted by using the inquiry received in S1301. The inquiry to be transmitted is usually associated with the user identifier. The inquiry to be transmitted includes, for example, the position information acquired by the user processing unit 33 or the location identifier acquired by the location acquisition unit 331.

(S1304) The user transmission unit 34 transmits the inquiry formed in S1303 to the information processing device 1.

(S1305) The user reception unit 35 determines whether a screen has been received from the information processing device 1. In the case of receiving the screen, the process goes to S1306, and in the case of not receiving the screen, the process goes to S1307.

(S1306) The user processing unit 33 forms a screen to be output based on the received screen. The user output unit 36 outputs the screen.

(S1307) The user processing unit 33 determines whether to end the output of the screen. In the case of ending the output of the screen, the process returns to S1301, and in the case of not ending the output of the screen, the process returns to S1305. The case of ending the output of the screen is, for example, the case of receiving an end instruction from the user.

In the flowchart of FIG. 13, the process ends by turning off the power or by using a process end interrupt.

### <Specific Examples>

Hereinafter, specific operation examples of the information system A in the embodiment will be described.

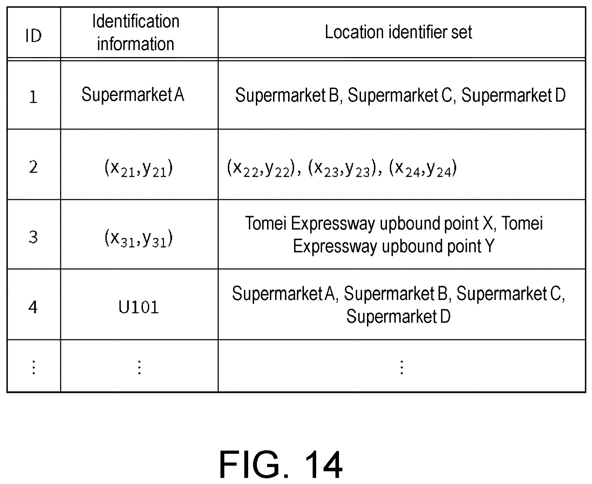

It is assumed that the group management unit 111 of the information processing device 1 stores the group management table of FIG. 14. The group management table is a table that manages group information. The group management table is a table that manages information for determining multiple comparison target positions for identification information included in a received inquiry. The group information is the location identifier set of FIG. 14, but may be considered as including identification information. The group management table manages the records having "ID", "identification information", and "location identifier set". "ID" is information that identifies a record. "Identification information" is, here, for example, a store name (name of a supermarket), position information (latitude, longitude), or a user identifier. "Location identifier set" is a set of location identifiers that identify respective multiple comparison target positions. The location identifier is, here, a store name (name of a supermarket), position information (latitude, longitude), or a location name (name of a location on a highway). The store name is an example of a location name.

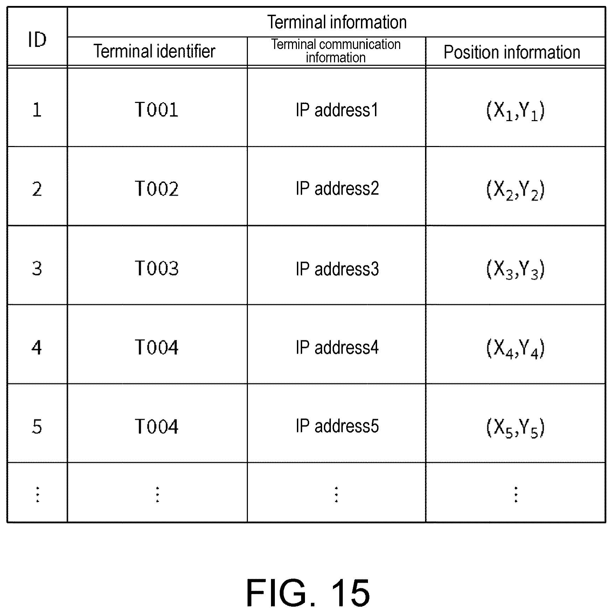

It is assumed that the terminal management unit 112 stores the terminal management table of FIG. 15. The terminal management table manages records having "ID" and "terminal information". "Terminal information" here has "terminal identifier", "terminal communication information", and "position information". "Position information" is the latest position information of the mobile terminal 2.

It is assumed that the mobile terminal 2, in a state of being able to provide motion pictures, continuously associates the current position information with the terminal identifier and transmits to the information processing device 1. Also, the position reception unit 121 of the information processing device 1 receives the position information associated with the terminal identifier from each mobile terminal 2. Then, the processing unit 13 associates the position information with the terminal identifier and accumulates in the terminal management table (FIG. 15).

The storage unit 11 of the information processing device 1 stores map information. It is assumed that the map information has the position information of the store paired with a store name, and the position information of the location paired with a location name.

In such situation, the following four specific examples will be described. Specific Example 1 is a case where a user inputs a location identifier (here, a store name) that identifies multiple comparison target positions into a smartphone, and obtains motion pictures of multiple locations including a location identified by another location identifier paired with the location identifier. Specific Example 2 is a case where a user instructs a specific button of a specific application on a smartphone in order to obtain motion pictures of respective multiple comparison target positions. Specific Example 3 is a case where a user inputs a user identifier on a screen of a specific application on a smartphone and then instructs a button in order to obtain motion pictures of the respective of multiple comparison target positions. Specific Example 4 is a case where, when a user passes through a specific location while moving in an automobile, motion pictures are output to a navigation terminal to know the conditions of multiple roads that branch after passing through the specific location.

### (Specific Example 1)

It is assumed that a user has started an application of the user terminal 3. The application is an application that can acquire and output motion pictures of multiple comparison locations. Next, the application is started at the user terminal 3. Then, the user terminal 3 outputs a screen for inputting identification information. Such a screen has a field for inputting identification information and a "transmit" button. The "transmit" button is a button for transmitting an inquiry to the information processing device 1.

Next, it is assumed that the user inputs identification information "Supermarket A" on the screen and instructs the "transmit" button.

Then, the user reception unit 32 of the user terminal 3 receives an inquiry "<identification information>Supermarket A". Next, the user processing unit 33 acquires the user identifier "U001" from the user storage unit 31. The inquiry acquisition unit 332 forms the inquiry "<user identifier>U001 <identification information>Supermarket A" to be transmitted by using the received inquiry. Next, the user transmission unit 34 transmits the inquiry to the information processing device 1.

Next, the inquiry reception unit 122 of the information processing device 1 receives the inquiry "<user identifier>U001 <identification information>Supermarket A" from the user terminal 3.

Next, the terminal determination means 1311 acquires the identification information "Supermarket A" included in the received inquiry. The terminal determination means 1311 acquires a location identifier set "Supermarket B, Supermarket C, Supermarket D" paired with the identification information "Supermarket A" from a group management table (FIG. 14). Next, the terminal determination means 1311 acquires the respective pieces of position information of each of "Supermarket A, Supermarket B, Supermarket C, Supermarket D" by referring to the map information in the storage unit 11. It is assumed that the position information of each of the four supermarkets is (x₂₁, y₂₁), (x₂₂, y₂₂), (x₂₃, y₂₃), (x₂₄, y₂₄), respectively. Next, the terminal determination means 1311 determines position information of the mobile terminal 2 that satisfies the location condition (present at the supermarket) for the position information of each of the four supermarkets from the terminal management table (FIG. 15). Here, it is assumed that the terminal determination means 1311 acquires the terminal identifier "T001" of the mobile terminal 2 present at Supermarket A, the terminal identifier "T002" of the mobile terminal 2 present at Supermarket B, the terminal identifier "T003" of the mobile terminal 2 present at Supermarket C, and the terminal identifier "T004" of the mobile terminal 2 present at Supermarket D from the terminal management table (FIG. 15).

Next, the instruction transmission means 1312 acquires terminal communication information paired with each of the acquired four terminal identifiers from the terminal management table (FIG. 15). Next, the instruction transmission means 1312 transmits a transmission instruction to the mobile terminal 2, which is the communication destination indicated by each of the four pieces of terminal communication information.

Next, the mobile reception unit 22 of each of the four mobile terminals 2 receives the transmission instruction from the information processing device 1. Next, the image capturing unit 232 acquires a motion picture. Also, the attribute value acquisition unit 233 acquires one or more attribute values. Here, it is assumed that the attribute value acquisition unit 233 acquires attribute values, which are the prices of products in the motion picture. Also, the configuration unit 234 acquires a terminal identifier from the mobile storage unit 21. The configuration unit 234 associates one or more attribute values and the terminal identifier with the motion picture to form the information to be transmitted. Next, the mobile transmission unit 24 transmits the motion picture, etc., to the information processing device 1.

Next, the motion picture reception means 1313 of the information processing device 1 receives motion pictures, etc., from the respective four mobile terminals 2 to which the transmission instruction is transmitted. The motion pictures, etc., have one or more attribute values including the prices of products in the motion pictures, and the terminal identifiers. Next, the motion picture acquisition unit 131 temporarily accumulates the received motion pictures and attribute values with respect to the terminal identifiers in a buffer (not shown) for the respective four mobile terminals 2.

Next, the ranking means 1321 uses the prices corresponding to the mobile terminals 2 to acquire ranks (natural numbers from "1" to "4") of the respective four mobile terminals 2 in an ascending order of price. Next, the configuration means 1322 forms a screen in which the acquired four motion pictures are arranged from top to bottom according to the ranking. Also, the configuration means 1322 forms a screen that includes a map showing the positions of the four comparison target positions (supermarkets). Also, the configuration means 1322 forms a screen having information in which the attribute values (here, prices) of the four comparison target positions are described in order of the ranking. Furthermore, the configuration means 1322 forms a screen that includes the current time acquired from a clock (not shown).

Next, the screen transmission unit 141 transmits the screen formed by the screen configuration unit 132 to the user terminal 3 that transmits the inquiry.

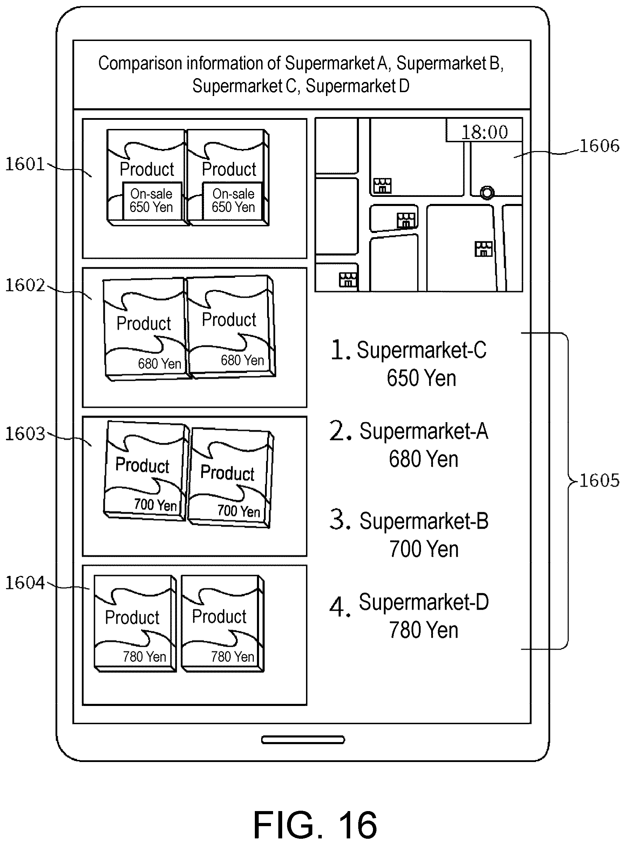

Next, the user reception unit 35 of the user terminal 3 receives the screen from the information processing device 1. Next, the user processing unit 33 forms a screen to be output based on the received screen. The user output unit 36 outputs the screen. An example of such a screen is FIG. 16. In FIG. 16, the reference symbols 1601 to 1604 are windows in which the motion pictures captured inside the respective supermarkets are output. The motion pictures are arranged in order of the ranking of the respective supermarkets. The reference symbol 1605 is the ranking result of the attribute values (here, prices). The reference symbol 1606 shows the locations where the four supermarkets are present on the map.

Through the processes, the user can obtain the motion pictures of the supermarkets that the user wants to compare. Also, the user can obtain a screen according to the ranking of the respective motion pictures.

### (Specific Example 2)

It is assumed that the user has launched an application of the user terminal 3. The application is an application that can acquire and output motion pictures of multiple comparison locations. Next, in the user terminal 3, the application is launched and a screen is output. The screen has a "Send" button. Also, the screen here does not have components such as fields for inputting identification information. The "Send" button is a button for transmitting an inquiry to the information processing device 1.

Next, it is assumed that the user has instructed the "Send" button on the screen. Then, the location acquisition unit 331 of the user terminal 3 acquires position information (x₂₁, y₂₁) by the GPS receiver. Next, the user reception unit 32 acquires an inquiry having the position information (x₂₁, y₂₁). Next, the user processing unit 33 acquires the user identifier "U001" of the user storage unit 31. The inquiry acquisition unit 332 forms an inquiry "<user identifier>U001 <identification information> (x₂₁, y₂₁)" to be transmitted by using the accepted inquiry. Next, the user transmission unit 34 transmits the inquiry to the information processing device 1.

Next, the inquiry reception unit 122 of the information processing device 1 receives the inquiry "<user identifier>U001 <identification information> (x₂₁, y₂₁)" from the user terminal 3.

Next, the terminal determination means 1311 acquires the identification information (x₂₁, y₂₁) included in the received inquiry. The terminal determination means 1311 acquires a location identifier set (x₂₂, y₂₂) (x₂₃, y₂₃) (x₂₄, y₂₄) paired with the identification information (x₂₁, y₂₁) from the group management table (FIG.14). Next, the terminal determination means 1311 determines the position information of the mobile terminal 2 that satisfies the location condition for the respective four pieces of position information (x₂₁, y₂₁) (x₂₂, y₂₂) (x₂₃, y₂₃) (x₂₄, y₂₄) from the terminal management table (FIG.15). The respective four pieces of position information (x₂₁, y₂₁) (x₂₂, y₂₂) (x₂₃, y₂₃) (x₂₄, y₂₄) are position information of supermarket A, supermarket B, supermarket C, and supermarket D, respectively. Also, it is assumed that the terminal determination means 1311 has acquired the terminal identifier "T001" of the mobile terminal 2 present in supermarket A, the terminal identifier "T002" of the mobile terminal 2 present in supermarket B, the terminal identifier "T003" of the mobile terminal 2 present in supermarket C, and the terminal identifier "T004" of the mobile terminal 2 present in supermarket D from the terminal management table (FIG.15). Next, the instruction transmission means 1312 transmits a transmission instruction to the respective four mobile terminals 2.

Next, the respective four mobile terminals 2 described above transmits motion pictures, etc., to the information processing device 1 by the same operation as the operation described in Specific Example 1.

Next, the information processing device 1 receives motion pictures, etc., by the same operation as the operation described in Specific Example 1, forms a screen based on the motion pictures, etc., and transmits the screen to the user terminal 3.

Next, the user terminal 3 receives and outputs the screen by the same operation as the operation described in Specific Example 1. Such an output example is FIG.16.

### (Specific Example 3)

It is assumed that the user has started an application of the user terminal 3. The application is an application that can acquire and output motion pictures of multiple comparison locations. Next, in the user terminal 3, the application is started. Then, the user terminal 3 outputs a screen for inputting identification information. Such a screen has a field for inputting identification information and a "Send" button. The "Send" button is a button for transmitting an inquiry to the information processing device 1.

Next, it is assumed that the user inputs identification information "U101" to the screen and instructs the "Send" button. The identification information "U101" is a user identifier.

Then, the user reception unit 32 of the user terminal 3 receives the inquiry "<identification information>U101". Next, the user transmission unit 34 transmits the inquiry "<identification information>U101" to the information processing device 1. The inquiry may include "<user identifier>U101".

Next, the inquiry reception unit 122 of the information processing device 1 receives the inquiry "<identification information>U101" from the user terminal 3.

Next, the terminal determination means 1311 acquires the identification information "U101" included in the received inquiry. The terminal determination means 1311 acquires the location identifier set "supermarket A, supermarket B, supermarket C, supermarket D" paired with the identification information "U101" from the group management table (FIG.14). Next, the terminal determination means 1311 acquires the respective pieces of position information of "supermarket A, supermarket B, supermarket C, supermarket D" by referring to the map information in the storage unit 11. The position information of each of the four supermarkets is (x₂₁, y₂₁) (x₂₂, y₂₂) (x₂₃, y₂₃) (x₂₄, y₂₄), respectively. Next, the terminal determination means 1311 determines the position information of the mobile terminal 2 that satisfies the location condition (present in the supermarket) with respect to the position information of each of the four supermarkets from the terminal management table (FIG.15). Here, it is assumed that the terminal determination means 1311 has acquired the terminal identifier "T001" of the mobile terminal 2 present in supermarket A, the terminal identifier "T002" of the mobile terminal 2 present in supermarket B, the terminal identifier "T003" of the mobile terminal 2 present in supermarket C, and the terminal identifier "T004" of the mobile terminal 2 present in supermarket D from the terminal management table (FIG.15).

Next, the instruction transmission means 1312 acquires the terminal communication information paired with each of the acquired four terminal identifiers from the terminal management table (FIG.15). Next, the instruction transmission means 1312 transmits a transmission instruction to the mobile terminal 2, which is the communication destination indicated by the respective four pieces of terminal communication information.

Next, each of the four mobile terminals 2 transmits motion pictures, etc., to the information processing device 1 by the same operation as described in Specific Example 1.

Next, the information processing device 1 receives motion pictures, etc., by the same operation as described in Specific Example 1, forms a screen based on the motion pictures, etc., and transmits the screen to the user terminal 3.

Next, the user terminal 3 receives and outputs the screen by the same operation as described in Specific Example 1. An example of such output is FIG.16.

### (Specific Example 4)

In Specific Example 4, it is assumed that the terminal management table (FIG.15) manages terminal information including position information transmitted from the mobile terminal 2 mounted in automobiles. The mobile terminal 2 is, for example, a drive recorder or a navigation terminal.

It is assumed that the user passes through a point slightly before the junction between the upbound Tomei Expressway and the upbound Shin-Tomei Expressway while driving an automobile. Then, it is assumed that the location acquisition unit 331 of the user terminal 3, which is the navigation terminal of the automobile, acquires position information (x₃₁, y₃₁). Next, it is assumed that the inquiry acquisition unit 332 determines that the position information satisfies a predetermined condition (for example, matching or the distance falling within a threshold) with respect to the position information for forming an inquiry stored in the user storage unit 31. Next, the inquiry acquisition unit 332 forms an inquiry having the identification information (x₃₁, y₃₁), which is the position information, and the user identifier of the user storage unit 31. Next, the user transmission unit 34 transmits the inquiry "<user identifier>U001 <identification information> (x₃₁, y₃₁)" to the information processing device 1. The user terminal 3 may continuously acquire position information and continuously transmit inquiries having the position information to the information processing device 1.

Next, the inquiry reception unit 122 of the information processing device 1 receives the inquiry "<user identifier>U001 <identification information> (x₃₁, y₃₁)" from the user terminal 3.

Next, the terminal determination means 1311 acquires the identification information (x₃₁, y₃₁) included in the received inquiry. The terminal determination means 1311 acquires the location identifier set "Tomei Expressway upbound point X, Shin-Tomei Expressway upbound point Y" paired with r the identification information (x₃₁, y₃₁) from the group management table (FIG.14). Next, the terminal determination means 1311 acquires the position information of "Tomei Expressway upbound point X, Shin-Tomei Expressway upbound point Y" by referring to the map information in the storage unit 11. It is assumed that the position information of each point of the two highways was (xₕ₁, yₕ₁) and (xₕ₂, yₕ₂), respectively. Next, the terminal determination means 1311 determines the position information of the mobile terminal 2 that satisfies the location condition for the two pieces of position information (xₕ₁, yₕ₁) and (xₕ₂, yₕ₂) from the terminal management table (FIG.15). Here, it is assumed that the terminal determination means 1311 acquires the terminal identifier "T001" of the mobile terminal 2 traveling on "Tomei Expressway upbound point X" and the terminal identifier "T002" of the mobile terminal 2 traveling on "Shin-Tomei Expressway upbound point Y" from the terminal management table (FIG.15).

Next, the instruction transmission means 1312 acquires the terminal communication information paired with each of the two acquired terminal identifiers from the terminal management table (FIG.15). Next, the instruction transmission means 1312 transmits the transmission instruction to the mobile terminal 2, which is the communication destination indicated by each of the two pieces of terminal communication information.

Next, the mobile reception unit 22 of each of the two mobile terminals 2 receives the transmission instruction from the information processing device 1. Next, the image capturing unit 232 acquires a motion picture. Also, the attribute value acquisition unit 233 acquires one or more attribute values. Here, it is assumed that the attribute value acquisition unit 233 acquires the attribute values that are the number of automobiles in the motion picture and the congestion level based on the number of automobiles. Also, the configuration unit 234 acquires the terminal identifier from the mobile storage unit 21. The configuration unit 234 associates one or more attribute values and the terminal identifier with the motion picture to form the information to be transmitted. Next, the mobile transmission unit 24 transmits the motion picture, etc., to the information processing device 1.

Next, the motion picture reception means 1313 of the information processing device 1 receives motion pictures, etc., from the respective two mobile terminals 2 to which the transmission instruction is transmitted. The motion pictures, etc., are provided with the number of automobiles in the motion picture, the congestion level, and the terminal identifier. Next, the motion picture acquisition unit 131 temporarily accumulates the received motion picture and attribute values with respect to the terminal identifier in a buffer (not shown) for each of the two mobile terminals 2.

Next, the ranking means 1321 uses the congestion level corresponding to the mobile terminal 2 to acquire the rank ("1" or "2") of each of the two mobile terminals 2 in order of smaller congestion level values. Next, the configuration means 1322 forms a screen in which the two acquired motion pictures are arranged according to the ranking. Also, it is assumed that the screen also includes information containing the highway name and the congestion level of each road.

Next, the screen transmission unit 141 transmits the screen formed by the screen configuration unit 132 to the user terminal 3 that transmits the inquiry.

Next, the user reception unit 35 of the user terminal 3 receives the screen from the information processing device 1. Next, the user processing unit 33 forms a screen to be output based on the received screen. The user processing unit 33 forms a screen that integrates the information of the received screen and the information of the screen being output. The screen being output is a map during navigation.

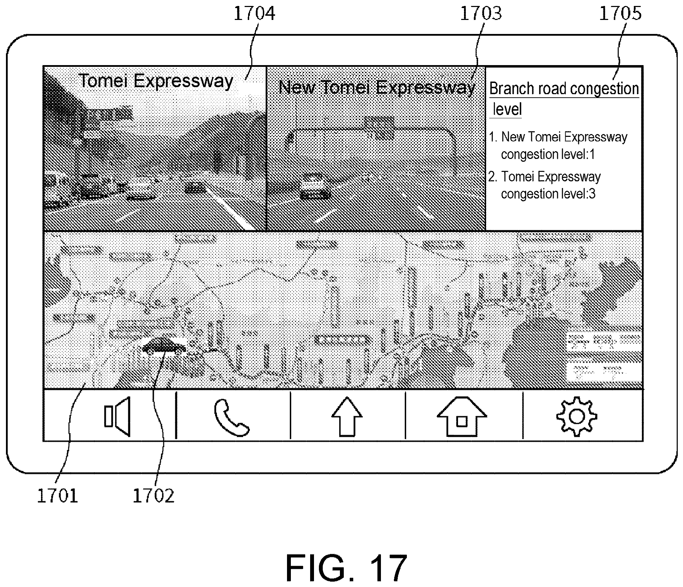

Next, the user output unit 36 outputs the screen. An example of such a screen is FIG.17. In FIG.17, 1701 is a map displayed on the navigation terminal which is the user terminal 3, and an icon 1702 of the user's automobile is displayed at the position of the road being traveled. Also, a motion picture 1703 of the rank "1" is arranged at the center of the screen, and the motion picture 1704 of the rank "2" is arranged on the left side of the screen. Also, at 1705, the congestion level of each road is displayed.

By outputting the screen of FIG.17, the user can select an appropriate highway from among multiple highways and proceed with driving before a highway junction.

As described above, according to the embodiment, motion pictures of multiple comparison target positions can be provided.

Also, according to the embodiment, ranked motion pictures can be provided.

The process according to the embodiment may be realized by software. Th software may be distributed by downloading the software, etc. Also, the software may be recorded on a recording medium such as a CD-ROM and distributed. This also applies to other embodiments in the specification. The software that realizes the information processing device 1 in the embodiment is a program as follows. That is, the program causes a computer to function as: an inquiry reception unit that receives an inquiry including identification information for identifying multiple comparison target positions from a user terminal; a motion picture acquisition unit that acquires motion pictures transmitted from mobile terminals existing at the respective locations identified by using the identification information; a screen configuration unit that forms a screen using the motion pictures; and a screen transmission unit that transmits the screen to the user terminal.

### (Embodiment 2)

### <Overview of Embodiment 2>

In the embodiment, the difference from Embodiment 1 is that the mobile terminal 2 constantly transmits the motion picture to the information processing device. In Embodiment 2, in the case of receiving an inquiry, the information processing device acquires the motion pictures of multiple comparison target positions corresponding to the inquiry from the stored motion pictures.

### <Overview of Information System B>

The conceptual diagram of an information system B in the embodiment is the same as information system A, except for the device reference numerals.

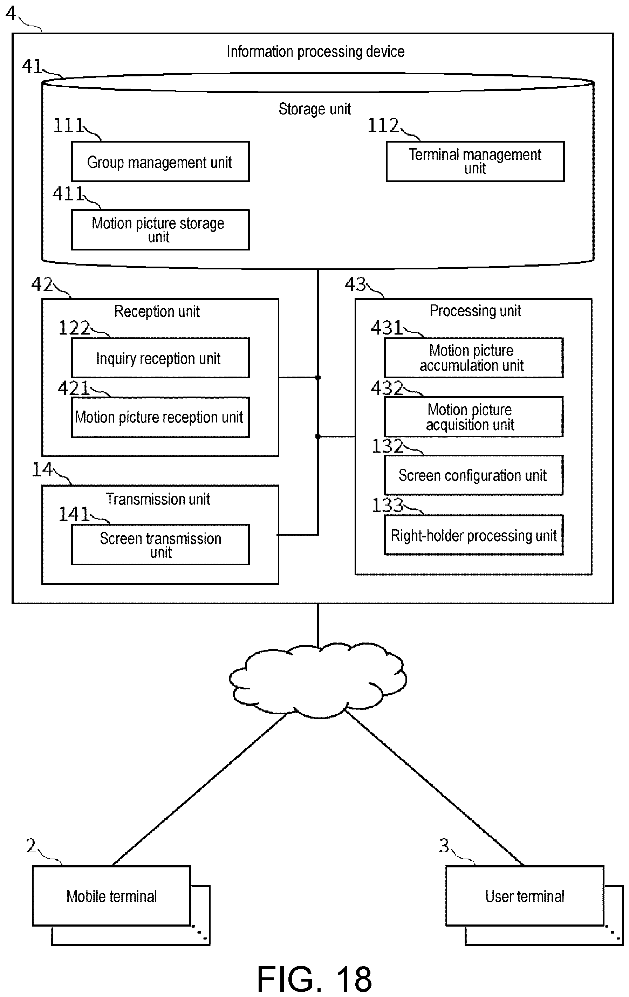

FIG. 18 is a block diagram of the information system B in the embodiment. In FIG. 18, details of the mobile terminal 2 and the user terminal 3 are omitted. In FIG. 18, details of the right-holder process unit 133 are also omitted.

The information system B includes an information processing device 4, one or more mobile terminals 2, and one or more user terminals 3.

The information processing device 4 includes a storage unit 41, a reception unit 42, a processing unit 43, and a transmission unit 14. The storage unit 41 includes a group management unit 111, a terminal management unit 112, and a motion picture storage unit 411. The reception unit 42 includes an inquiry reception unit 122, and a motion picture reception unit 421. The processing unit 43 includes a motion picture accumulation unit 431, a motion picture acquisition unit 432, the screen configuration unit 132, and the right-holder process unit 133.

### <Details of Components of Information Processing Device 4>

Various types of information are stored in the storage unit 41. The various types of information are, for example, group information, terminal information, motion pictures, one or more attribute values associated with the motion pictures, and map information.

One or more motion pictures are stored in the motion picture storage unit 411. The motion pictures are usually associated with user identifiers. The motion pictures are associated with, for example, one or more attribute values. Frames forming the motion pictures are associated with, for example, time information and position information.

The motion picture reception unit 421 receives the motion pictures associated with position information from the respective mobile terminals 2. The position information is usually (latitude, longitude), but may also be location identifiers such as location names. The motion picture reception unit 421 continuously acquires motion pictures from the respective mobile terminals 2. Such motion pictures are usually additional motion pictures.

The processing unit 43 performs various processes. The various processes are, for example, processes performed by the motion picture accumulation unit 431, the motion picture acquisition unit 432, the screen configuration unit 132, or the right-holder process unit 133.

The motion picture accumulation unit 431 accumulates the motion pictures received by the motion picture reception unit 421. The motion picture accumulation unit 431 usually accumulates motion pictures in association with terminal identifiers of the mobile terminals 2. The motion picture accumulation unit 431 usually accumulates motion pictures in the motion picture storage unit 411. The respective frames forming the motion pictures accumulated by the motion picture accumulation unit 431 are usually associated with position information.

The motion picture acquisition unit 432 acquires the motion pictures transmitted from the mobile terminals 2 present at the respective locations identified by the identification information included in the received inquiry.

The motion picture acquisition unit 432 acquires motion pictures associated with the position information corresponding to the respective locations identified by the identification information from among multiple motion pictures accumulated by the motion picture accumulation unit 431. The motion picture acquisition unit 432 acquires, for example, motion pictures associated with the position information corresponding to the respective locations identified by the identification information from among multiple motion pictures in the motion picture storage unit 411.

### <Description of Components of Mobile Terminal 2>

The mobile reception unit 22 of the mobile terminal 2 does not receive a transmission instruction here. The mobile transmission unit 24 of the mobile terminal 2 continuously transmits motion pictures to the information processing device 4. Continuously transmitting indicates transmission of two or more times. Continuously transmitting indicates, for example, transmitting constantly, transmitting periodically, or transmitting irregularly but for two or more times.

The storage unit 41 and the motion picture storage unit 411 may be non-volatile recording media, but can also be realized with volatile recording media.

The process by which information is stored in the storage unit 41, etc., is irrelevant. For example, information may be stored in the storage unit 41, etc., via a recording medium, information transmitted via a communication line, etc., may be stored in the storage unit 41, etc., or information input via an input device may be stored in the storage unit 41, etc.

The reception unit 42 and the motion picture reception unit 421 are usually realized by a wireless or wired communication means, but may also be realized by means for receiving broadcasts.

The processing unit 43, the motion picture accumulation unit 431, and the motion picture acquisition unit 432 can usually be realized by a processor, memory, etc. The processing procedures of the processing unit 43, etc., are usually realized by software, and the software is recorded on a recording medium such as ROM. However, the processing procedures may also be realized by hardware (dedicated circuits). The processor is a CPU, an MPU, a GPU, etc., and the type is irrelevant.

### <Operation>

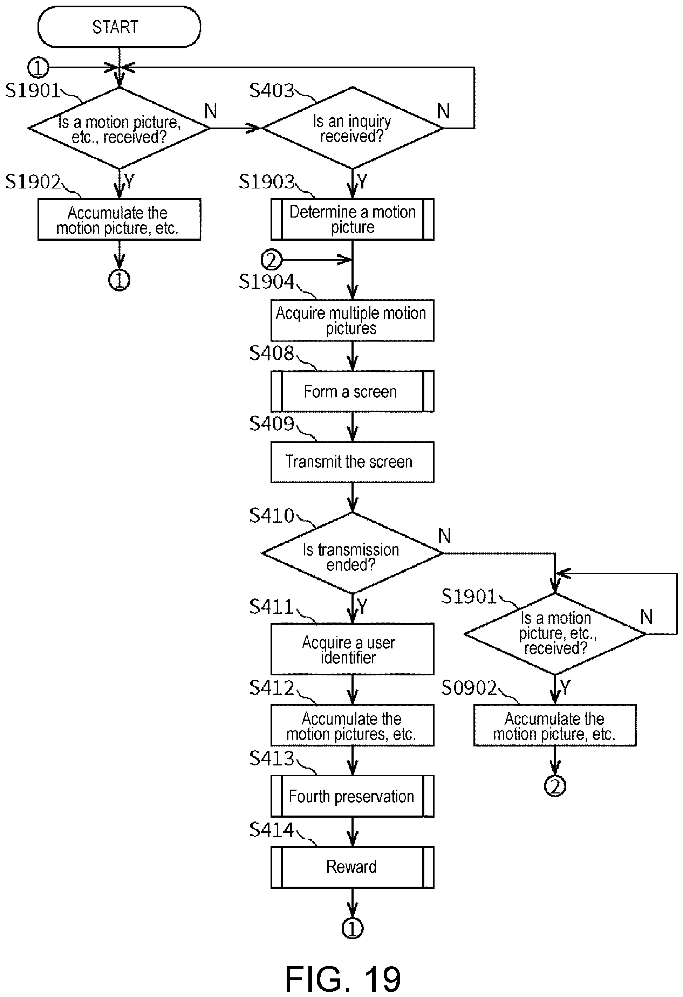

Next, an operation example of the information processing device 4 will be described by using the flowchart of FIG. 19. In the flowchart of FIG. 19, the description of the same steps as in the flowchart of FIG. 4 will be omitted.

(S1901) The motion picture reception unit 421 determines whether the motion pictures, etc., are received from the respective one or more mobile terminals 2. In the case of receiving motion pictures, etc., the process goes to S1902, and in the case of not receiving motion pictures, etc., the process goes to S403.

(S1902) The motion picture accumulation unit 431 accumulates one or more motion pictures, etc., in the motion picture storage unit 411 in association with terminal identifiers.

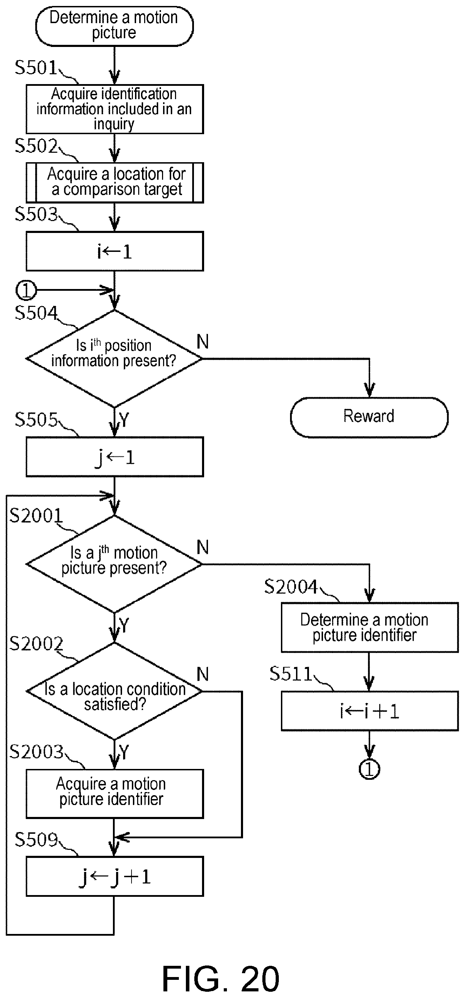

(S1903) The motion picture acquisition unit 432 determines the motion pictures of multiple locations corresponding to the inquiry from among the motion pictures stored in the motion picture storage unit 411. An example of such motion picture determination process will be described by using the flowchart of FIG. 20.

(S1904) The motion picture acquisition unit 432 acquires the motion pictures, etc., identified by the motion picture identifiers determined in S1903 from the motion picture storage unit 411. The process goes to S408.

In the flowchart of FIG. 19, the processes are ended by turning off the power or by using a process end interrupt.

Next, an example of the motion picture determination process of S1903 will be described by using the flowchart of FIG. 20. In the flowchart of FIG. 20, the description of the same steps as in the flowchart of FIG. 5 will be omitted.

(S2001) The motion picture acquisition unit 432 determines whether the j^{th} motion picture is present in the motion picture storage unit 411. In the case where the j^{th} motion picture is present, the process goes to S2002, and in the case where the j^{th} motion picture is not present, the process returns to the higher-order process.

(S2002) The motion picture acquisition unit 432 determines whether the j^{th} position information and the latest position information associated with the j^{th} motion picture in the motion picture storage unit 411 satisfy the location condition. In the case where the location condition is satisfied, the process goes to S2003, and in the case where the location condition is not satisfied, the process goes to S509.

(S2003) The motion picture acquisition unit 432 acquires a motion picture identifier that identifies the j^{th} motion picture, and temporarily accumulates the motion picture identifier in a buffer (not shown) in association with the i^{th} position information.

(S2004) The motion picture acquisition unit 432 determines a motion picture identifier from one or more motion picture identifiers associated with the i^{th} position information. The motion picture acquisition unit 432 determines, for example, a motion picture identifier with the position information where the distance between the position indicated by the position information paired with the motion picture identifier and the position indicated by the i^{th} position information is the minimum.

As described above, according to the embodiment, motion pictures of multiple comparison target positions can be provided.

Also, according to the embodiment, ranked motion pictures can be provided.

The software for realizing the information processing device 4 in the embodiment is a program as follows. That is, the program causes a computer to function as: an inquiry reception unit that receives an inquiry including identification information for identifying multiple comparison target positions from a user terminal; a motion picture acquisition unit that acquires motion pictures transmitted from mobile terminals present at the respective locations identified by the identification information; a screen configuration unit that forms a screen by using the motion pictures; and a screen transmission unit that transmits the screen to the user terminal.

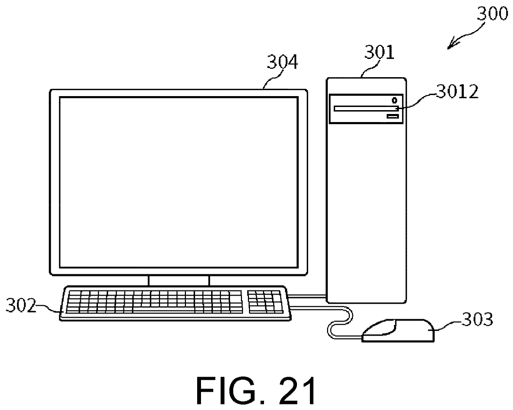

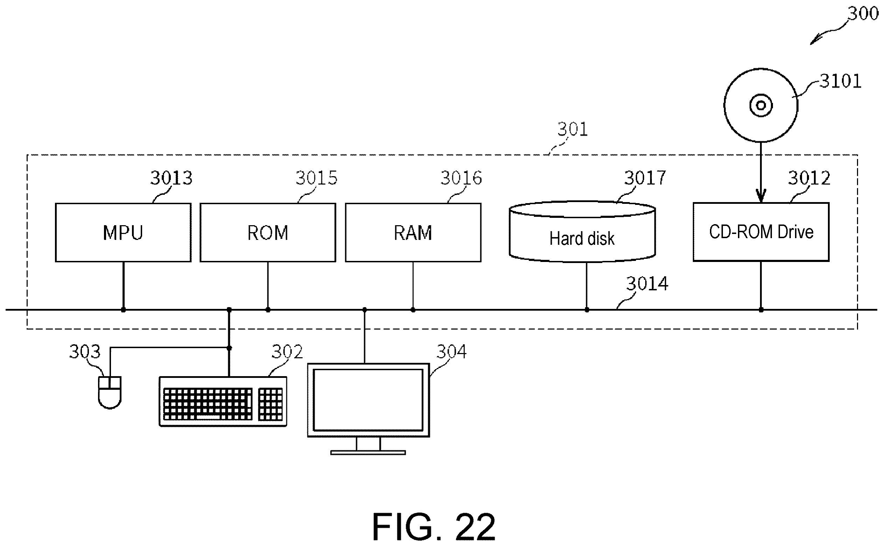

Also, FIG. 21 shows the appearance of a computer that executes the program described in the specification to realize the information processing device 1, etc., of the various embodiments described above. The embodiments can be realized by computer hardware and a computer program executed thereon. FIG. 21 is an overview diagram of a computer system 300, and FIG. 22 is a block diagram of the system 300.

In FIG. 21, the computer system 300 includes a computer 301 including a CD-ROM drive, a keyboard 302, a mouse 303, and a monitor 304.

In FIG. 22, the computer 301 includes, in addition to the CD-ROM drive 3012, an MPU 3013, a bus 3014 connected to the CD-ROM drive 3012, etc., a ROM 3015 for storing programs such as boot-up programs, a RAM 3016 connected to the MPU 3013 for temporarily storing instructions of application programs and providing temporary storage space, and a hard disk 3017 for storing application programs, system programs, and data. Although not shown here, the computer 301 may further include a network card that provides connection to a LAN.

A program that causes the computer system 300 to execute the functions of the information processing device 1, etc., of the embodiments may be stored in a CD-ROM 3101, inserted into the CD-ROM drive 3012, and further transferred to the hard disk 3017. Alternatively, the program may be transmitted to the computer 301 via a network not shown and stored in the hard disk 3017. The program is loaded into the RAM 3016 at the time of execution. The program may be loaded directly from the CD-ROM 3101 or the network.

The program does not necessarily have to include an operating system (OS), third-party programs, or the like that cause the computer 301 to execute the functions of the information processing device 1, etc., of the embodiments. The program only needs to include the portion of the instructions that calls appropriate functions (modules) in a controlled manner to obtain desired results. How the computer system 300 operates is well known, and detailed description is omitted.

In the program, steps such as transmitting information and receiving information do not include processing performed by hardware, for example, processing performed by modems or interface cards in transmission steps (processing that can only be performed by hardware).

Also, the computer that executes the above program may be singular or multiple. That is, centralized processing may be performed, or distributed processing may be performed.

Also, in each of the embodiments, it goes without saying that multiple communication means provided in a device may be physically realized by a medium.

Also, in each of the embodiments, each process may be realized by centralized processing by a single device, or may be realized by distributed processing by multiple devices.

The invention is not limited to the above embodiments, and various modifications are possible, and it goes without saying that these are also included within the scope of the invention.

### Industrial Applicability

As described above, the information processing device 1 according to the invention has the effect of being able to provide motion pictures of multiple locations of comparison targets, and is useful as a server or the like that provides motion pictures.

## Claims

1. An information processing device, comprising:
an inquiry reception unit, receiving, from a user terminal, an inquiry comprising identification information for identifying a plurality of locations of comparison targets;
a motion picture acquisition unit, acquiring motion pictures transmitted from mobile terminals present at the respective locations identified by the identification information;
a screen configuration unit, forming a screen by using the motion pictures; and
a screen transmission unit, transmitting the screen to the user terminal.

2. The information processing device as claimed in claim 1,
wherein the motion picture acquisition unit refers to a group management unit storing one or more pieces of group information comprising location identifiers of the respective locations of the comparison targets, acquires the location identifiers corresponding to the identification information comprised in the inquiry, and acquires the motion pictures received from the mobile terminals present at the respective locations identified by the location identifiers.

3. The information processing device as claimed in claim 1 or 2,
wherein the motion picture acquisition unit transmits transmission instructions for the motion pictures to the mobile terminals present at the respective locations identified by the identification information, and receives the motion pictures from the mobile terminals in response to transmission of the transmission instructions.

4. The information processing device as claimed in claim 3, further comprising a position reception unit, receiving position information from the respective mobile terminals,
wherein the motion picture acquisition unit comprises:
a terminal determination means, determining the mobile terminals present in the respective locations identified by the identification information by using the position information received by the position reception unit;
an instruction transmission means, transmitting the transmission instruction to the respective mobile terminals determined by the terminal determination means; and
a motion picture reception means, receiving the motion pictures from the respective mobile terminals.

5. The information processing device as claimed in claim 1 or 2, wherein the motion picture acquisition unit comprises:
an instruction transmission means, transmitting an inquiry based on the identification information to the mobile terminals; and
a motion picture reception means, receiving the motion pictures from the respective mobile terminals determined as corresponding to the identification information, in response to transmission of the inquiry.

6. The information processing device as claimed in claim 1 or 2, further comprising:
a motion picture reception unit, receiving the motion pictures associated with position information from the mobile terminals; and
a motion picture accumulation unit, accumulating the respective motion pictures in association with the position information,
wherein the motion picture acquisition unit acquires the motion pictures associated with the position information corresponding to the respective locations identified by the identification information from the motion pictures accumulated by the motion picture accumulation unit.

7. The information processing device as claimed in claim 1, wherein the screen configuration unit comprises:
a ranking means, acquiring attribute values of the respective motion pictures and ranking the motion pictures by using the attribute values; and
a configuration means, forming the screen in accordance with a ranking of the respective motion pictures.

8. The information processing device as claimed in claim 1, further comprising a third preservation means, accumulating the motion pictures or the screen comprising the motion pictures by associating the motion pictures or the screen comprising the motion pictures with a right-holder identifier identifying a user of the user terminal.

9. A user terminal, comprising:
a location acquisition unit, acquiring a location identifier identifying a location of a user terminal;
an inquiry acquisition unit, acquiring an inquiry comprising identification information by using the location identifier;
a user transmission unit, transmitting the inquiry to an information processing device;
a user reception unit, receiving, from the information processing device, a screen formed by using motion pictures of a plurality of locations comprising the location identified by the location identifier; and
a user terminal, comprising a user output unit, outputting the screen.

10. A user terminal, comprising:
an inquiry acquisition unit, acquiring an inquiry comprising identification information comprising a user identifier;
a user transmission unit, transmitting the inquiry to an information processing device;
a user reception unit, receiving, from the information processing device, a screen formed by using motion pictures of a plurality of locations identified by a plurality of location identifiers corresponding to the user identifier; and
a user output unit, outputting the screen.

11. An information processing method, realized by an inquiry reception unit, a motion picture acquisition unit, a screen configuration unit, and a screen transmission unit, the information processing method comprising:
an inquiry reception step of receiving, by the inquiry reception unit, an inquiry comprising identification information identifying a plurality of locations of comparison targets, the identification information being received from a user terminal;
a motion picture acquisition step of acquiring motion pictures transmitted from mobile terminals present at the respective locations identified by the identification information;
a screen configuration step of forming, by the screen configuration unit, a screen by using the motion pictures; and
a screen transmission step of transmitting, by the screen transmission unit, the screen to the user terminal.
